(19) Europäisches Patentamt
European Patent Office
Office européen des brevets

(11) EP 0 733 652 A1

(12) **EUROPEAN PATENT APPLICATION**
published in accordance with Art. 158(3) EPC

(43) Date of publication:
**25.09.1996 Bulletin 1996/39**

(21) Application number: **95902929.9**

(22) Date of filing: **08.12.1994**

(51) Int. Cl.[6]: **C08F 10/00**, C08F 4/642

(86) International application number:
**PCT/JP94/02068**

(87) International publication number:
**WO 95/15985 (15.06.1995 Gazette 1995/25)**

(84) Designated Contracting States:
**BE DE ES**

(30) Priority: **08.12.1993 JP 307890/93**

(71) Applicant: **Asahi Kasei Kogyo Kabushiki Kaisha**
**Osaka-shi Osaka 530 (JP)**

(72) Inventors:
- **MATSUSHITA, Fumio**
  **Kurashiki-shi, Okayama-ken 710 (JP)**
- **NOZAKI, Takashi**
  **Kıbi-gun, Okayama-ken 710-13 (JP)**
- **KAJI, Satoru**
  **Kurashiki-shi, Okayama-ken 710 (JP)**
- **YAMAGUCHI, Fumihiko**
  **Kurashiki-shi, Okayama-ken 710 (JP)**

(74) Representative: **Strehl Schübel-Hopf Groening & Partner**
**Maximilianstrasse 54**
**80538 München (DE)**

# (54) NOVEL OLEFIN POLYMERIZATION CATALYST AND PROCESS FOR POLYMERIZING OLEFIN BY USING THE SAME

(57) Disclosed is a novel olefin polymerization catalyst system comprising the following components (A), (B) and (C):

(A) a transition metal compound represented by the formula $R^0{}_xR^1{}_aR^2{}_bR^3{}_cR^4{}_dM$, wherein M represents a transition metal selected from zirconium, titanium and hafnium; $R^1$ represents a multidentate ligand or a monodentate ligand; each of $R^2$, $R^3$ and $R^4$ independently represents a ligand selected from a multidentate ligand, a monodentate ligand, a halogen atom, a hydrogen atom, an alkyl group and a derivative thereof, and an aryl group and a derivative thereof; a is an integer of 1 or more and each of b, c and d is an integer of from 0 to 3, with the proviso that a+b+c+d=4 ; $R^0$ is a divalent group which bridges $R^1$ with a ligand selected from $R^2$, $R^3$ and $R^4$; and x is 0 or 1;
(B) an inorganic solid component comprising a particulate inorganic solid having hydroxyl groups on the surface thereof and, carried thereon, an organoaluminumoxy compound having alkyl groups; and
(C) an organoaluminum compound.

Also disclosed is a method for polymerizing an olefin in the presence of this catalyst system. By using the catalyst system of the present invention which has high polymerization activity, olefin polymers having not only excellent powder characteristics but also excellent various properties can be effectively and efficiently produced even without conducting a preliminary polymerization. Hence, the commerical value of the present invention is extremely high.



Printed by Rank Xerox (UK) Business Services
2.13.6/3.4

## Description

### Background of the Invention

### Technical Field

The present invention relates to a novel olefin polymerization catalyst system and a method for polymerizing an olefin using the catalyst system. More particularly, the present invention is concerned with a novel olefin polymerization catalyst system which exhibits high polymerization activity and can be advantageously used in suspension polymerization or gaseous phase polymerization of olefins for producing olefin polymers having not only excellent powder characteristics but also excellent various properties, even without conducting a preliminary polymerization, which catalyst system comprises the following components (A), (B) and (C):

(A) a transition metal compound represented by the formula (1)

$$R^0_xR^1_aR^2_bR^3_cR^4_dM \qquad (1)$$

wherein:

M represents a transition metal selected from the group consisting of zirconium, titanium and hafnium;
$R^1$ represents a multidentate ligand or a monodentate ligand;
each of $R^2$, $R^3$ and $R^4$ independently represents a ligand selected from the group consisting of a multidentate ligand, a monodentate ligand, a halogen atom, a hydrogen atom, an alkyl group and a derivative thereof, and an aryl group and a derivative thereof;
a is an integer of 1 or more and each of b, c and d is an integer of from 0 to 3, with the proviso that $a+b+c+d=4$ ;
$R^0$ is a divalent group which bridges $R^1$ with a ligand selected from $R^2$, $R^3$ and $R^4$; and
x is 0 or 1;

(B) an inorganic solid component comprising a particulate inorganic solid having hydroxyl groups on the surface thereof and, carried thereon, an organoaluminumoxy compound having alkyl groups; and
(C) an organoaluminum compound.

The present invention is also concerned with a method for polymerizing an olefin using such a novel catalyst system.

### Prior Art

Ziegler-Natta catalysts comprising a titanium compound and an organoaluminum compound have been widely known as a catalyst for producing olefin homopolymers and olefin copolymers.

On the other hand, it has recently been found that when a catalyst system comprising a solvent-soluble transition metal compound containing a halogen, such as bis(cyclopentadienyl)zirconium dichloride, and an aluminoxane, which is one type of organoaluminumoxy compound, is used for homopolymerization of ethylene or copolymerization of ethylene with an $\alpha$-olefin, the catalyst system exhibits high polymerization activity. With respect to the details of this technique, reference can be made to, for example, Examined Japanese Patent Application Publication No. 4-12283 (corresponding to DE 3127133.2).

In Unexamined Japanese Patent Application Laid-open Specification Nos. 60-35006, 60-35007 and 60-35008, it has been proposed to use, as the transition metal compound component of the above catalyst system comprising a transition metal compound and an aluminoxane, a mixture of at least two metallocenes or a substituted metallocene, so as to control the molecular weight and molecular weight distribution of a final ethylene polymer or to improve the copolymerizability of ethylene with an $\alpha$-olefin.

The catalyst systems proposed in the above-described prior art documents, each comprising a transition metal compound and an organoaluminumoxy compound, are soluble in a polymerization solvent. Hence, the above-mentioned catalyst systems have a problem in that when such catalyst systems are used in a suspension polymerization process or a gaseous phase polymerization process, the amount of a desired powder form of polymer obtained is extremely small, but a large amount of an indefinite form of polymer is produced, which is very likely to stick to the inner wall and agitating blades of a reactor. Therefore, such catalyst systems cannot be used for commercial scale practice of suspension polymerization or gaseous phase polymerization. Accordingly, the use of the above-mentioned catalyst systems is inevitably limited to a solution polymerization process. However, a solution polymerization process has a problem in that when it is attempted to produce a polymer having a high molecular weight, the viscosity of the solution

of the polymer is considerably increased, so that productivity becomes very low. Therefore, these catalyst systems are disadvantageous in that the production costs for desired olefin polymers become high.

In order to solve the above-mentioned problems, it has been attempted to polymerize an olefin by suspension polymerization or gaseous phase polymerization, using a catalyst comprising a porous inorganic oxide as a carrier, such as silica, alumina or silica-alumina and, carried thereon, at least one member selected from a transition metal compound and an organoaluminumoxy compound.

For example, Unexamined Japanese Patent Application Laid-Open Specification Nos. 60-106808 and 60-106809 (both of which correspond to EP 0142143) disclose a method in which a first filler is contacted with a highly active catalyst component comprising a hydrocarbon solvent-soluble titanium compound and/or a hydrocarbon solvent-soluble zirconium compound, thereby obtaining a contact-treatment product, and ethylene is homopolymerized or copolymerized with an $\alpha$-olefin in the presence of the above-mentioned contact-treatment product, an organoaluminum compound and a second filler having an affinity to a polyolefin which affinity is equal to or higher than that of the first filler, to thereby obtain a composition comprising an ethylene polymer and the first and second fillers.

However, in this method, it is impossible to strongly bond the highly active catalyst component to the filler, so that not only is the catalyst activity low, but also the obtained ethylene polymer has poor powder characteristics. In addition, in this method, the obtained polymer is inevitably caused to contain a filler, irrespective of whether or not it is intended to incorporate the filler into the polymer.

Unexamined Japanese Patent Application Laid-Open Specification No. 61-31404 (corresponding to DE 3424697.5) discloses a method in which ethylene is homopolymerized or copolymerized with an $\alpha$-olefin in the presence of a mixed catalyst of a transition metal compound and an organoaluminum compound obtained by contacting a water-containing inorganic substance with trialkyl aluminum.

However, when a water-containing inorganic substance is contacted with trialkyl aluminum, only the water in the water-containing inorganic substance is reacted with the trialkyl aluminum to form a reaction product, but the formed reaction product is not chemically bonded to the inorganic substance, so that the formed reaction product cannot be securely carried on the inorganic substance. Further, the reaction between water and trialkyl aluminum is a vigorous exothermic reaction and hence it is very difficult to synthesize only an organoaluminumoxy compound selectively while controlling the molecular weight of the organoaluminumoxy compound to an appropriate level, so that it is difficult to obtain an organoaluminumoxy compound having a molecular weight in the range which is effective for facilitating polymerization. Therefore, this method cannot be effectively used in practice.

Unexamined Japanese Patent Application Laid-Open Specification No. 4-224808 discloses a method for $\alpha$-olefin polymerization using a solid catalyst which is obtained by contacting aluminoxane with an inorganic compound containing crystal water or having water adsorbed thereon, to thereby obtain a solid product, and subsequently contacting the obtained solid product with a metallocene compound and, optionally, an organometal compound. Further, Unexamined Japanese Patent Application Laid-Open Specification No. 6-145238 discloses a method for the polymerization of olefins, using a solid catalyst which is obtained by contacting and reacting aluminoxane with an inorganic oxide containing no water or having adsorbed thereon 10 % by weight or less of water, to thereby obtain a solid auxiliary catalyst comprising the inorganic oxide having the aluminoxane carried thereon, and contacting the obtained solid auxiliary catalyst with a transition metal compound and an organoalkylaluminum compound to prepare a solid catalyst, which catalyst is used immediately upon preparation thereof. However, in these methods, since aluminoxane is carried on an inorganic solid by utilizing adsorbed water or crystal water contained in the inorganic solid, a strong chemical bonding cannot be formed between the aluminoxane and the inorganic solid, and hence the aluminoxane cannot be securely carried on the inorganic solid. When such an aluminoxane-carrying inorganic solid is used as a catalyst, the aluminoxane is disadvantageously liberated from the inorganic solid during the polymerization. The liberated aluminoxane is reacted with a metallocene compound to form a complex having a polymerization activity, which complex disadvantageously causes formation of a polymer having an indefinite form but not having a desired form such as a particulate form. Thus, these methods cannot take full advantage of the use of a catalyst carried on a carrier. Therefore, it is difficult to commercially use these methods.

Unexamined Japanese Patent Application Laid-Open Specification Nos. 60-35006, 60-35007 and 60-35008 have a description to the effect that a transition metal compound and an organoaluminumoxy compound may be carried on a carrier, such as silica, alumina or silica-alumina, and the resultant product can be used as a catalyst.

Unexamined Japanese Patent Application Laid-Open Specification Nos. 61-108610, 61-296008 and 5-155931 disclose a method in which an olefin is polymerized in the presence of a catalyst comprising an inorganic oxide as a carrier and, carried thereon, a transition metal compound, such as ziconocene, and aluminoxane.

However, a catalyst containing a transition metal compound and an organoaluminumoxy compound is extremely likely to be deactivated with the lapse of time even during the storage, and it is difficult to maintain the activity. Therefore, when an olefin polymerization is conducted by suspension polymerization or gaseous phase polymerization, using the catalyst described in the above-mentioned three Japanese patent documents, the catalyst cannot exhibit the high polymerization activity which has been possessed by the catalyst immediately after the production of the catalyst. Therefore, these methods have a problem in that they cannot be commercially used because the catalyst activity is low.

Unexamined Japanese Patent Application Laid-Open Specification No. 63-280703 (corresponding to EP 0294942) discloses an olefin polymerization catalyst comprising an organometal compound, a particulate carrier, aluminoxane, a compound containing a transition metal selected from the metals of Group IV of the Periodic Table, and an olefin polymer formed by preliminary polymerization. Further, Unexamined Japanese Patent Application Laid-Open Specification No. 5-155930 discloses a method for the preliminary polymerization of an olefin, using a particulate carrier having water adsorbed thereon and surface hydroxyl groups in specific amounts.

These methods have been expected to provide advantages that the preliminary polymerization improves the powder characteristics of the final polymer and that a polymer formed by the preliminary polymerization protects the catalyst containing a transition metal compound and an organoaluminumoxy compound and prevents the catalyst from being deactivated with time. However, although the powder characteristics of the polymer are improved to some extent, the improvement is not satisfactory. Also, the prevention of the catalyst from being deactivated with time is unsatisfactory. In addition, these methods have problems in that, since it is necessary to involve the step of preliminary polymerization, not only is the quality of the final polymer likely to be distributed, but also the production cost of the polymer is high.

Examined Japanese Patent Application Publication No. 6-39496 discloses a method in which an olefin polymerization is conducted in the presence of a catalyst system comprising a zirconium compound and a reaction mixture obtained by reacting a mixture of aluminoxane and trialkyl aluminum with an inorganic oxide having hydroxyl groups on the surface thereof.

In this method, the catalyst system is formed by contacting a transition metal compound with an organoaluminumoxy compound carried on a carrier in a polymerization reaction system. Therefore, the polymerization starts immediately upon formation of the catalyst system. For this reason, deactivation of the catalyst is less likely to occur. That is, this method is excellent in that the activity originally possessed by a catalyst comprising a transition metal compound and an organoaluminumoxy compound is exhibited. Further, in this method, the organoaluminumoxy compound can be strongly bonded to an inorganic oxide by a reaction between the organoaluminumoxy compound and the surface hydroxyl groups of the inorganic oxide, so that there is no danger that the organoaluminumoxy compound carried on the inorganic oxide is liberated from the inorganic oxide and reacts with the transition metal compound in the polymerization reaction system, wherein the resultant reaction product would act as an unfavorable catalyst to produce an indefinite-form polymer. Therefore, this method is also excellent in that a polymer having excellent powder characteristics is obtained. However, this method is still not satisfactory from the viewpoint of obtaining a high polymerization activity of a catalyst.

Unexamined Japanese Patent Application Laid-Open Specification No. 60-35006 discloses a method for producing a so-called reactor blend polymer, using a catalyst system comprising two or more different transition metal compounds and aluminoxane. Unexamined Japanese Patent Application Laid-Open Specification No. 60-35008 discloses a method for producing polyethylene having a broad molecular weight distribution, using a catalyst system comprising at least two metallocenes and aluminoxane. However, in each of these techniques, the catalyst system is soluble in a solvent, so that when the polymerization is performed by suspension polymerization or gaseous phase polymerization, not only do the powder characteristics of the final polymer become extremely poor, but also the formed polymer sticks, for example, to the inner wall surface of the reactor and to the agitation blades of the reactor, and hence the polymer cannot be easily collected. Therefore, these techniques are disadvantageous in that they cannot be commercially used.

Unexamined Japanese Patent Application Laid-Open Specification Nos. 5-155932 and 5-155933 disclose a method for producing an olefin polymer having improved properties, such as a high melt tension and improved powder characteristics, in which method a preliminary polymerization is conducted using a catalyst system comprising at least two transition metal compounds and a particulate carrier having water adsorbed thereon and surface hydroxyl groups in specific amounts.

This method also has been expected to provide advantages that the preliminary polymerization improves the powder characteristics of the final polymer and that a polymer formed by the preliminary polymerization protects the catalyst containing a transition metal compound and an organoaluminumoxy compound and prevents the catalyst from being deactivated with time. However, although the powder characteristics of the polymer are improved to some extent, the improvement is not satisfactory. Also, the prevention of the catalyst from being deactivated with time is unsatisfactory. In addition, this method has problems in that, since it is necessary to involve the step of preliminary polymerization, not only is the quality of the final polymer likely to be varied, but also the production cost of the polymer is high.

As described hereinabove, the prior art techniques have problems in that it is impossible to obtain a polymer having excellent powder characteristics while simultaneously satisfying all of the following requirements for commercial application of a polymer production technique: a high polymerization activity of a catalyst, stable product quality and low cost.

Therefore, it has been desired to develop a novel catalyst system which has high polymerization activity and can be used for producing an olefin polymer having excellent powder characteristics even without conducting a preliminary polymerization of an olefin.

Summary of the Invention

In these situations, the present inventors have made extensive and intensive studies with a view toward solving the above-mentioned problems accompanying conventional catalyst systems for olefin polymerization, and developing a novel catalyst system for olefin polymerization, which has high polymerization activity and can be advantageously used for producing an olefin polymer having excellent powder characteristics, even without conducting a preliminary polymerization of an olefin.

As a result, it has been unexpectedly found that, when a catalyst system comprising (A) a compound of a transition metal selected from Group IVA (zirconium, titanium and hafnium) of the Periodic Table, (B) an inorganic solid component comprising a particulate inorganic solid having hydroxyl groups on the surface thereof and, carried thereon, an organoaluminumoxy compound, and (C) an organoaluminum compound, is used for polymerizing an olefin, such a catalyst system exhibits high polymerization activity, and a polymer having excellent powder characteristics can be effectively and efficiently produced even without conducting a preliminary polymerization of an olefin. The present invention has been completed, based on this novel finding.

Accordingly, it is one object of the present invention to provide an olefin polymerization catalyst system which has high polymerization activity and can be advantageously used for producing an olefin polymer having excellent powder characteristics, even without conducting a preliminary polymerization of an olefin.

It is another object of the present invention to provide a method for polymerizing an olefin using a catalyst system having high polymerization activity, which method is advantageous in that an olefin polymer having excellent powder characteristics can be effectively and efficiently produced even without conducting a preliminary polymerization of an olefin.

The foregoing and other objects, features and advantages of the present invention will become apparent to those skilled in the art from the following detailed description and appended claims.

Detailed Description of the Invention

In one aspect of the present invention, there is provided an olefin polymerization catalyst system comprising the following components (A), (B) and (C):

(A) at least one transition metal compound represented by the formula (1)

$$R^0_xR^1_aR^2_bR^3_cR^4_dM \qquad (1)$$

wherein:

M represents a transition metal selected from the group consisting of zirconium, titanium and hafnium;

$R^1$ represents a ligand selected from the group consisting of a ligand having a cyclopentadienyl skeleton, a five-membered heterocyclic ligand containing 1 to 4 carbon atoms and one or more heteroatoms selected from the group consisting of nitrogen, phosphorus, arsenic, antimony and bismuth, and a heteroatom tridentate ligand having coordinating atoms selected from the group consisting of nitrogen, phosphorus and oxygen, wherein each ligand is independently unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from the substituents, that each alkyl group independently possesses a linear, a branched or a cyclic configuration, that at least one substituent of each substituted ligand is optionally bonded to the ligand through an oxygen, a nitrogen, a sulfur or a phosphorus atom, and that at least one carbon atom of at least one substituent of each substituted ligand is optionally replaced by a silicon atom;

each of $R^2$, $R^3$ and $R^4$ independently represents a ligand selected from the group consisting of a ligand having a cyclopentadienyl skeleton, a five-membered heterocyclic ligand having 1 to 4 carbon atoms and one or more heteroatoms selected from the group consisting of nitrogen, phosphorus, arsenic, antimony and bismuth, a heteroatom tridentate ligand having coordinating atoms selected from the group consisting of nitrogen, phosphorus and oxygen, a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, an alkylaryl group having a $C_6$-$C_{20}$ aryl group substituted with a $C_1$-$C_{20}$ alkyl group, a $-SO_3R$ group in which R is a $C_1$-$C_8$ hydrocarbon group which is unsubstituted or substituted with at least one halogen atom, a halogen atom, and a hydrogen atom, wherein each of the alkyl groups as the ligand and as the substituent independently posseses a linear, a branched or a cyclic configuration, each of the alkyl, aryl, alkylaryl and aralkyl groups as the ligands is optionally bonded to the transition

metal through an oxygen, a nitrogen, a sulfur or a phosphorus atom to form a heteroatom-mediated ligand, at least one carbon atom of each of the alkyl, aryl, aralkyl and alkylaryl groups as the ligands is optionally replaced by a silicon atom, and each of the ligand having a cyclopentadienyl skeleton, the five-membered heterocyclic ligand having 1 to 4 carbon atoms and one or more heteroatoms selected from the group consisting of nitrogen, phosphorus, arsenic, antimony and bismuth, and the heteroatom tridentate ligand having coordinating atoms selected from the group consisting of nitrogen, phosphorus and oxygen is unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from the substituents, that each alkyl group as the substituent independently possesses a linear, a branched or a cyclic configuration, that at least one substituent of each substituted ligand is optionally bonded to the ligand through an oxygen, a nitrogen, a sulfur or a phosphorus atom, and that at least one carbon atom of at least one substituent of each substituted ligand is optionally replaced by a silicon atom;

a is an integer of 1 or more and each of b, c and d is an integer of from 0 to 3, with the proviso that $a+b+c+d = 4$;

each of $R^1$, $R^2$, $R^3$ and $R^4$ is bonded to the transition metal M;

$R^0$ represents a group which bridges $R^1$ with a ligand selected from $R^2$, $R^3$ and $R^4$ and, which is selected from the group consisting of a $C_1$-$C_{20}$ alkylene group, a $C_1$-$C_{20}$ substituted alkylene group, a $C_1$-$C_{20}$ alkylidene group, a silylene group and a substituted silylene group having at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group; and

x is 0 or 1;

(B) an inorganic solid component comprising a particulate inorganic solid (b-1) having hydroxyl groups on the surface thereof and, carried thereon, an organoaluminumoxy compound (b-2) having repeating alkylaluminumoxy units each represented by the formula (5)

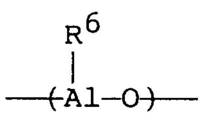

(5)

wherein $R^6$ represents a $C_1$-$C_{12}$ linear, branched or cyclic alkyl group; and

(C) an organoaluminum compound.

In another aspect of the present invention, there is provided a method for homopolymerizing an olefin or copolymerizing olefins using the above-mentioned catalyst system of the present invention.

Hereinbelow, detailed explanation is made with respect to the olefin polymerization catalyst system of the present invention and the method for polymerizing an olefin using the catalyst system.

The term "polymerization" used herein frequently means not only homopolymerization but also copolymerization, and the term "polymer" used herein frequently means not only a homopolymer but also a copolymer. The term "polymerization" used herein is not intended to include a preliminary polymerization [(i.e., prepolymerization) which is conventionally carried out, prior to a polymerization for obtaining a final polymer, for the purpose of, for example, controlling the particle size or powder characteristics of a polymer, or preventing a lowering of the catalyst activity], but mean only a regular polymerization which is carried out mainly for a polymer as a final product, wherein the regular polymerization is carried out under reaction conditions, including a reaction temperature and a reaction pressure, which are satisfactory for comercial scale practice of the polymerization reaction. Such a reaction temperature is generally 50 °C or more, preferably 60 °C or more, and such a reaction pressure is generally 2 $kg/cm^2$ or more, preferably 5 $kg/cm^2$ or more.

For easy understanding of the present invention, the essential features and various preferred embodiments of the present invention are enumerated below.

1. An olefin polymerization catalyst system comprising the following components (A), (B) and (C):

(A) at least one transition metal compound represented by the formula (1)

$$R^0_xR^1_aR^2_bR^3_cR^4_dM \qquad (1)$$

wherein:

M represents a transition metal selected from the group consisting of zirconium, titanium and hafnium;

$R^1$ represents a ligand selected from the group consisting of a ligand having a cyclopentadienyl skeleton, a five-membered heterocyclic ligand containing 1 to 4 carbon atoms and one or more heteroatoms selected from the group consisting of nitrogen, phosphorus, arsenic, antimony and bismuth, and a heteroatom tridentate ligand having coordinating atoms selected from the group consisting of nitrogen, phosphorus and oxygen, wherein each ligand is independently unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from the substituents, that each alkyl group independently possesses a linear, a branched or a cyclic configuration, that at least one substituent of each substituted ligand is optionally bonded to the ligand through an oxygen, a nitrogen, a sulfur or a phosphorus atom, and that at least one carbon atom of at least one substituent of each substituted ligand is optionally replaced by a silicon atom;

each of $R^2$, $R^3$ and $R^4$ independently represents a ligand selected from the group consisting of a ligand having a cyclopentadienyl skeleton, a five-membered heterocyclic ligand having 1 to 4 carbon atoms and one or more heteroatoms selected from the group consisting of nitrogen, phosphorus, arsenic, antimony and bismuth, a heteroatom tridentate ligand having coordinating atoms selected from the group consisting of nitrogen, phosphorus and oxygen, a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, an alkylaryl group having a $C_6$-$C_{20}$ aryl group substituted with a $C_1$-$C_{20}$ alkyl group, a $-SO_3R$ group in which R is a $C_1$-$C_8$ hydrocarbon group which is unsubstituted or substituted with at least one halogen atom, a halogen atom, and a hydrogen atom, wherein each of the alkyl groups as the ligand and as the substituent independently possesses a linear, a branched or a cyclic configuration, each of the alkyl, aryl, alkylaryl and aralkyl groups as the ligands is optionally bonded to the transition metal through an oxygen, a nitrogen, a sulfur or a phosphorus atom to form a heteroatom-mediated ligand, at least one carbon atom of each of the alkyl, aryl, aralkyl and alkylaryl groups as the ligands is optionally replaced by a silicon atom, and each of the ligand having cyclopentadienyl skeleton, the five-membered heterocyclic ligand having 1 to 4 carbon atoms and one or more heteroatoms selected from the group consisting of nitrogen, phosphorus, arsenic, antimony and bismuth, and the heteroatom tridentate ligand having coordinating atoms selected from the group consisting of nitrogen, phosphorus and oxygen is unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from the substituents, that each alkyl group as the substituent independently possesses a linear, a branched or a cyclic configuration, that at least one substituent of each substituted ligand is optionally bonded to the ligand through an oxygen, a nitrogen, a sulfur or a phosphorus atom, and that at least one carbon atom of at least one substituent of each substituted ligand is optionally replaced by a silicon atom;

a is an integer of 1 or more and each of b, c and d is an integer of from 0 to 3, with the proviso that $a+b+c+d = 4$ ;

each of $R^1$, $R^2$, $R^3$ and $R^4$ is bonded to the transition metal M;

$R^0$ represents a group which bridges $R^1$ with the ligand selected from $R^2$, $R^3$ and $R^4$ and, which is selected from the group consisting of a $C_1$-$C_{20}$ alkylene group, a $C_1$-$C_{20}$ substituted alkylene group, a $C_1$-$C_{20}$ alkylidene group, a silylene group and a substituted silylene group having at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group; and

x is 0 or 1;

(B) an inorganic solid component comprising a particulate inorganic solid (b-1) having hydroxyl groups on the surface thereof and, carried thereon, an organoaluminumoxy compound (b-2) having repeating alkylaluminumoxy units each represented by the formula (5)

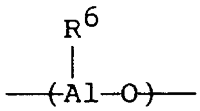

(5)

wherein $R^6$ represents a $C_1$-$C_{12}$ linear, branched or cyclic alkyl group; and

(C) an organoaluminum compound.

2. The catalyst system according to item 1 above, wherein the component (C) is a compound represented by the following formula (6) or (7):

$$R^7{}_nAlX_{3-n} \quad (6)$$

wherein $R^7$ represents a $C_1$-$C_{12}$ linear, branched or cyclic alkyl group or a $C_6$-$C_{20}$ aryl group; X represents a halogen atom or a hydrogen atom; and n is an integer of from 1 to 3; or

$$R^7{}_nAlY_{3-n} \quad (7)$$

wherein $R^7$ is as defined for formula (6); Y represents an $-OR^8$ group, an $-OSiR^9_3$ group, an $-OAlR^{10}_2$ group, an $-NR^{11}_2$ group, an $-SiR^{12}_3$ group or an $-N(R^{13})AlR^{14}_2$ group, wherein each of $R^8$, $R^9$, $R^{10}$ and $R^{14}$ independently represents a $C_1$-$C_{12}$ alkyl group or a $C_6$-$C_{20}$ aryl group, $R^{11}$ represents a hydrogen atom, a $C_1$-$C_{12}$ alkyl group, a $C_6$-$C_{20}$ aryl group, or a silyl group which is unsubstituted or substituted with at least one $C_1$-$C_{12}$ alkyl group, and each of $R^{12}$ and $R^{13}$ independently represents a $C_1$-$C_{12}$ alkyl group, with the proviso that each alkyl group independently possesses a linear, a branched or a cyclic configuration; and n is 1 or 2.

3. The catalyst system according to item 1 or 2 above, wherein, in the component (B), the particulate inorganic solid (b-1) having hydroxyl groups on the surface thereof has a pore volume (PV: $cm^3/g$) of from 0.4 to 1.4 $cm^3/g$ and a specific surface area (SA: $m^2/g$) of from 150 to 800 $m^2/g$, with the proviso that the pore volume (PV: $cm^3/g$) and the specific surface area (SA: $m^2/g$) satisfy the following relationship:

$$SA \leqq -625 \times PV + 1100$$

4. The catalyst system according to any one of items 1 to 3 above, wherein, in the component (B), the particulate inorganic solid (b-1) having hydroxyl groups on the surface thereof has an average particle diameter of from 5 to 200 μm.

5. The catalyst system according to any one of items 1 to 4 above, wherein, in the component (B), the particulate inorganic solid (b-1) having hydroxyl groups on the surface thereof is at least one member selected from the group consisting of $SiO_2$, $Al_2O_3$, MgO, $MgCl_2$, $ZrO_2$, $TiO_2$, $B_2O_3$, CaO, ZnO, BaO, $V_2O_5$, $Cr_2O_3$, ThO, mixtures thereof and composite oxides thereof.

6. The catalyst system according to any one of items 1 to 4 above, wherein, in the component (B), the particulate inorganic solid (b-1) having hydroxyl groups on the surface thereof is a particulate silica.

7. The catalyst system according to item 1 above, wherein the component (B) is one which is prepared by subjecting a particulate inorganic solid having hydroxyl groups on the surface thereof to heat treatment at a temperature in the range of from 150 to 1000 °C to obtain particulate inorganic solid (b-1) having a hydroxyl group content adjusted to a predetermined level within the range of from 0.5 to 15 % by weight and contacting the particulate inorganic solid (b-1) with organoaluminumoxy compound (b-2), thereby causing the organoaluminumoxy compound (b-2) to be carried on the particulate inorganic solid (b-1).

8. The catalyst system according to item 1 above, wherein the component (B) is one which is prepared by contacting a particulate inorganic solid having hydroxyl groups on the surface thereof with an organoaluminum compound represented by the following formula (4):

$$R^5{}_nAlX_{3-n} \quad (4)$$

wherein $R^5$ represents a $C_1$-$C_{12}$ linear, branched or cyclic alkyl group or a $C_6$-$C_{20}$ aryl group; X represents a halogen atom or a hydrogen atom; and n is an integer of from 1 to 3,

to obtain particulate inorganic solid (b-1) having a hydroxyl group content adjusted to a predetermined level within

the range of from 0.5 to 15 % by weight, and contacting the particulate inorganic solid (b-1) with organoaluminumoxy compound (b-2), thereby causing the organoaluminumoxy compound (b-2) to be carried on the particulate inorganic solid (b-1).

9. The catalyst system according to item 1 above, wherein the component (B) is one which is prepared by contacting a particulate inorganic solid having hydroxyl groups on the surface thereof with a mixture of organoaluminumoxy compound (b-2) and an organoaluminum compound represented by the formula (4):

$$R^5{}_nAlX_{3-n} \qquad (4)$$

wherein $R^5$ represents a $C_1$-$C_{12}$ linear, branched or cyclic alkyl group or a $C_6$-$C_{20}$ aryl group; X represents a halogen atom or a hydrogen atom; and n is an integer of from 1 to 3,
to simultaneously effect an adjustment of the hydroxyl group content of the particulate inorganic solid to a predetermined level within the range of from 0.5 to 15 % by weight and a contact of the particulate inorganic solid with the organoaluminumoxy compound (b-2), thereby causing the organoaluminumoxy compound (b-2) to be carried on the particulate inorganic solid (b-1).

10. The catalyst system according to any one of items 1 to 9 above, wherein the atomic ratio ($Al_{b-2}$/M) of aluminum in the organoaluminumoxy compound (b-2) to the transition metal M is from 10 to 2000, the atomic ratio ($Al_c$/$Al_{b-2}$) of aluminum ($Al_c$) in the organoaluminum compound (c) to aluminum ($Al_{b-2}$) in the organoaluminumoxy compound (b-2) is from 0.01 to 5, and the organoaluminumoxy compound (b-2) is carried on the particulate inorganic solid (b-1) in an amount of from 0.5 to 500 mmol per g of the particulate inorganic solid, in terms of the amount of aluminum ($Al_{b-2}$) in the organoaluminumoxy compound (b-2).

11. A method for polymerizing an olefin, which comprises polymerizing at least one olefin selected from the group consisting of a $C_3$-$C_{20}$ $\alpha$-olefin and a $C_3$-$C_{20}$ cyclic olefin, or copolymerizing the at least one olefin with at least one compound represented by the formula $H_2C = CHR^{15}$ wherein $R^{15}$ is a $C_6$-$C_{20}$ aryl group, or with at least one $C_4$-$C_{20}$ linear, branched or cyclic diene, in the presence of a catalyst system comprising the following components (A), (B) and (C):

(A) at least one transition metal compound represented by the formula (1)

$$R^0{}_xR^1{}_aR^2{}_bR^3{}_cR^4{}_dM \qquad (1)$$

wherein:

M represents a transition metal selected from the group consisting of zirconium, titanium and hafnium;
$R^1$ represents a ligand selected from the group consisting of a ligand having a cyclopentadienyl skeleton, a five-membered heterocyclic ligand containing 1 to 4 carbon atoms and one or more heteroatoms selected from the group consisting of nitrogen, phosphorus, arsenic, antimony and bismuth, and a heteroatom tridentate ligand having coordinating atoms selected from the group consisting of nitrogen, phosphorus and oxygen, wherein each ligand is independently unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from the substituents, that each alkyl group independently possesses a linear, a branched or a cyclic configuration, that at least one substituent of each substituted ligand is optionally bonded to the ligand through an oxygen, a nitrogen, a sulfur or a phosphorus atom, and that at least one carbon atom of at least one substituent of each substituted ligand is optionally replaced by a silicon atom;
each of $R^2$, $R^3$ and $R^4$ independently represents a ligand selected from the group consisting of a ligand having a cyclopentadienyl skeleton, a five-membered heterocyclic ligand having 1 to 4 carbon atoms and one or more heteroatoms selected from the group consisting of nitrogen, phosphorus, arsenic, antimony and bismuth, a heteroatom tridentate ligand having coordinating atoms selected from the group consisting of nitrogen, phosphorus and oxygen, a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, an alkylaryl group having a $C_6$-$C_{20}$ aryl group substituted with a $C_1$-$C_{20}$ alkyl group, a $-SO_3R$ group in which R is a $C_1$-$C_8$ hydrocarbon group which is unsubstituted or substituted with at least one halogen atom, a halogen atom, and a hydrogen atom, wherein each of the alkyl groups as the ligand and as the substituent independently possesses a linear, a branched or a cyclic configuration, each of the alkyl, aryl, alkylaryl and aralkyl groups as the ligands is optionally bonded to the transition metal through an oxygen, a nitrogen, a sulfur or a phosphorus

atom to form a heteroatom-mediated ligand, at least one carbon atom of each of the alkyl, aryl, aralkyl and alkylaryl groups as the ligands is optionally replaced by a silicon atom, and each of the ligand having a cyclopentadienyl skeleton, the five-membered heterocyclic ligand having 1 to 4 carbon atoms and one or more heteroatoms selected from the group consisting of nitrogen, phosphorus, arsenic, antimony and bismuth, and the heteroatom tridentate ligand having coordinating atoms selected from the group consisting of nitrogen, phosphorus and oxygen is unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from the substituents, that each alkyl group as the substituent independently possesses a linear, a branched or a cyclic configuration, that at least one substituent of each substituted ligand is optionally bonded to the ligand through an oxygen, a nitrogen, a sulfur or a phosphorus atom, and that at least one carbon atom of at least one substituent of each substituted ligand is optionally replaced by a silicon atom;

a is an integer of 1 or more and each of b, c and d is an integer of from 0 to 3, with the proviso that a+b+c+d = 4 ;
each of $R^1$, $R^2$, $R^3$ and $R^4$ is bonded to the transition metal M;
$R^0$ represents a group which bridges $R^1$ with the ligand selected from $R^2$, $R^3$ and $R^4$ and, which is selected from the group consisting of a $C_1$-$C_{20}$ alkylene group, a $C_1$-$C_{20}$ substituted alkylene group, a $C_1$-$C_{20}$ alkylidene group, a silylene group and a substituted silylene group having at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group; and
x is 0 or 1;

(B) an inorganic solid component comprising a particulate inorganic solid (b-1) having hydroxyl groups on the surface thereof and, carried thereon, an organoaluminumoxy compound (b-2) having repeating alkylaluminumoxy units each represented by the formula (5)

$$-\!\left(\overset{\displaystyle R^6}{\underset{}{\overset{|}{Al}}}-O\right)\!- \qquad (5)$$

wherein $R^6$ represents a $C_1$-$C_{12}$ linear, branched or cyclic alkyl group; and
(C) an organoaluminum compound.

12. The method according to item 11 above, wherein the $C_3$-$C_{20}$ $\alpha$-olefin is selected from the group consisting of propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene, the $C_3$-$C_{20}$ cyclic olefin is selected from the group consisting of cyclopentene, cycloheptene, norbornene, 5-methyl-2-norbornene, tetracyclododecene and 2-methyl-1.4,5.8-dimethano-1,2,3,4,4a,5,8,8a-octahydronaphthalene, the compound represented by the formula $H_2C{=}CHR^{15}$, wherein $R^{15}$ is a $C_6$-$C_{20}$ aryl group, is styrene, and the $C_4$-$C_{20}$ linear, branched or cyclic diene is selected from the group consisting of 1,3-butadiene, 1,4-pentadiene, 1,4-hexadiene, 1,5-hexadiene and cyclohexadiene.
13. The method according to item 11 or 12 above, wherein the catalyst system is caused to be present in a reaction system for the polymerization or copolymerization by separately introducing the component (A), the component (B) and the component (C) into the reaction system.
14. The method according to item 11 or 12 above, wherein the catalyst system is caused to be present in a reaction system for the polymerization or copolymerization by forming an intimate mixture of the components (B) and (C), and separately introducing the intimate mixture and the component (A) into the reaction system.
15. The method according to item 11 or 12 above, wherein the catalyst system is caused to be present in a reaction system for the polymerization or copolymerization by forming an intimate mixture of the components (A) and (C), and separately introducing the intimate mixture and the component (B) into the reaction system.
16. A method for polymerizing ethylene, which comprises homopolymerizing ethylene, or copolymerizing ethylene with at least one compound selected from the group consisting of a compound represented by the formula $H_2C{=}CHR^{16}$ wherein $R^{16}$ is a $C_1$-$C_{18}$ linear, branched or cyclic alkyl group or a $C_6$-$C_{20}$ aryl group, a $C_3$-$C_{20}$ cyclic

olefin, and a $C_4$-$C_{20}$ linear, branched or cyclic diene, in the presence of a catalyst system comprising the following components (A), (B) and (C):

(A) at least one transition metal compound represented by the formula (1)

$$R^0_xR^1_aR^2_bR^3_cR^4_dM \qquad (1)$$

wherein:

M represents a transition metal selected from the group consisting of zirconium, titanium and hafnium;
$R^1$ represents a ligand selected from the group consisting of a ligand having a cyclopentadienyl skeleton, a five-membered heterocyclic ligand containing 1 to 4 carbon atoms and one or more heteroatoms selected from the group consisting of nitrogen, phosphorus, arsenic, antimony and bismuth, and a heteroatom tridentate ligand having coordinating atoms selected from the group consisting of nitrogen, phosphorus and oxygen, wherein each ligand is independently unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from the substituents, that each alkyl group independently possesses a linear, a branched or a cyclic configuration, that at least one substituent of each substituted ligand is optionally bonded to the ligand through an oxygen, a nitrogen, a sulfur or a phosphorus atom, and that at least one carbon atom of at least one substituent of each substituted ligand is optionally replaced by a silicon atom;
each of $R^2$, $R^3$ and $R^4$ independently represents a ligand selected from the group consisting of a ligand having a cyclopentadienyl skeleton, a five-membered heterocyclic ligand having 1 to 4 carbon atoms and one or more heteroatoms selected from the group consisting of nitrogen, phosphorus, arsenic, antimony and bismuth, a heteroatom tridentate ligand having coordinating atoms selected from the group consisting of nitrogen, phosphorus and oxygen, a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, an alkylaryl group having a $C_6$-$C_{20}$ aryl group substituted with a $C_1$-$C_{20}$ alkyl group, a $-SO_3R$ group in which R is a $C_1$-$C_8$ hydrocarbon group which is unsubstituted or substituted with at least one halogen atom, a halogen atom, and a hydrogen atom, wherein each of the alkyl groups as the ligand and as the substituent independently possesses a linear, a branched or a cyclic configuration, each of the alkyl, aryl, alkylaryl and aralkyl groups as the ligands is optionally bonded to the transition metal through an oxygen, a nitrogen, a sulfur or a phosphorus atom to form a heteroatom-mediated ligand, at least one carbon atom of each of the alkyl, aryl, aralkyl and alkylaryl groups as the ligands is optionally replaced by a silicon atom, and each of the ligand having a cyclopentadienyl skeleton, the five-membered heterocyclic ligand having 1 to 4 carbon atoms and one or more heteroatoms selected from the group consisting of nitrogen, phosphorus, arsenic, antimony and bismuth, and the heteroatom tridentate ligand having coordinating atoms selected from the group consisting of nitrogen, phosphorus and oxygen is unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from the substituents, that each alkyl group as the substituent independently possesses a linear, a branched or a cyclic configuration, that at least one substituent of each substituted ligand is optionally bonded to the ligand through an oxygen, a nitrogen, a sulfur or a phosphorus atom, and that at least one carbon atom of at least one substituent of each substituted ligand is optionally replaced by a silicon atom;
a is an integer of 1 or more and each of b, c and d is an integer of from 0 to 3, with the proviso that $a+b+c+d = 4$ ;
each of $R^1$, $R^2$, $R^3$ and $R^4$ is bonded to the transition metal M;
$R^0$ represents a group which bridges $R^1$ with the ligand selected from $R^2$, $R^3$ and $R^4$ and, which is selected from the group consisting of a $C_1$-$C_{20}$ alkylene group, a $C_1$-$C_{20}$ substituted alkylene group, a $C_1$-$C_{20}$ alkylidene group, a silylene group and a substituted silylene group having at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group; and

x is 0 or 1;

(B) an inorganic solid component comprising a particulate inorganic solid (b-1) having hydroxyl groups on the surface thereof and, carried thereon, an organoaluminumoxy compound (b-2) having repeating alkylaluminumoxy units each represented by the formula (5)

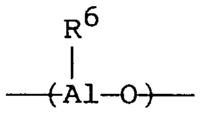

(5)

wherein $R^6$ represents a $C_1$-$C_{12}$ linear, branched or cyclic alkyl group; and

(C) an organoaluminum compound.

17. The method according to item 16 above, wherein the compound represented by the formula $H_2C=CHR^{16}$, wherein $R^{16}$ is a $C_1$-$C_{18}$ linear, branched or cyclic alkyl group or a $C_6$-$C_{20}$ aryl group, is selected from the group consisting of propylene, 1-butene, 1-pentene, 1-hexene, 4-methyl-1-pentene, 1-octene, 1-decene, 1-dodecene, 1-tetradecene, 1-hexadecene, 1-octadecene, 1-eicosene, vinylcyclohexane and styrene, the $C_3$-$C_{20}$ cyclic olefin is selected from the group consisting of cyclopentene, cycloheptene, norbornene, 5-methyl-2-norbornene, tetracyclododecene and 2-methyl-1.4,5.8-dimethano-1,2,3,4,4a,5,8,8a-octahydronaphthalene, and the $C_4$-$C_{20}$ linear, branched or cyclic diene is selected from the group consisting of 1,3-butadiene, 1,4-pentadiene, 1,4-hexadiene, 1,5-hexadiene and cyclohexadiene.

18. The method according to item 16 or 17 above, wherein the catalyst system is caused to be present in a reaction system for the polymerization or copolymerization by separately introducing the component (A), the component (B) and the component (C) into the reaction system.

19. The method according to item 16 or 17 above, wherein the catalyst system is caused to be present in a reaction system for the polymerization or copolymerization by forming an intimate mixture of the components (B) and (C), and separately introducing the intimate mixture and the component (A) into the reaction system.

20. The method according to item 16 or 17 above, wherein the catalyst system is caused to be present in a reaction system for the polymerization or copolymerization by forming an intimate mixture of the components (A) and (C), and separately introducing the intimate mixture and the component (B) into the reaction system.

As mentioned above, in the at least one transition metal compound represented by the formula (1)

$$R^0_xR^1_aR^2_bR^3_cR^4_dM \quad (1),$$

M represents a transition metal selected from the group consisting of zirconium, titanium and hafnium;

$R^1$ represents a ligand selected from the group consisting of a ligand having a cyclopentadienyl skeleton, a five-membered heterocyclic ligand containing 1 to 4 carbon atoms and one or more heteroatoms selected from the group consisting of nitrogen, phosphorus, arsenic, antimony and bismuth, and a heteroatom tridentate ligand having coordinating atoms selected from the group consisting of nitrogen, phosphorus and oxygen, wherein each ligand is independently unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from the substituents, that each alkyl group independently possesses a linear, a branched or a cyclic configuration, that at least one substituent of each substituted ligand is optionally bonded to the ligand through an oxygen, a nitrogen, a sulfur or a phosphorus atom, and that at least one carbon atom of at least one substituent of each substituted ligand is optionally replaced by a silicon atom;

each of $R^2$, $R^3$ and $R^4$ independently represents a ligand selected from the group consisting of a ligand having a cyclopentadienyl skeleton, a five-membered heterocyclic ligand having 1 to 4 carbon atoms and one or more heteroatoms selected from the group consisting of nitrogen, phosphorus, arsenic, antimony and bismuth, a heteroatom tridentate ligand having coordinating atoms selected from the group consisting of nitrogen, phosphorus and oxygen, a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, an alkylaryl group having a $C_6$-$C_{20}$ aryl group substituted with a $C_1$-$C_{20}$ alkyl group, a $-SO_3R$ group in which R is a $C_1$-$C_8$ hydrocarbon group which is unsubstituted or substituted with at least one halogen atom, a halogen atom, and a hydrogen atom, wherein each of the alkyl groups as the ligand and as the substituent independently possesses a linear, a branched or a cyclic configuration, each of the alkyl, aryl, alkylaryl and aralkyl groups as the ligands is optionally bonded to the transition metal through an oxygen, a nitrogen, a sulfur or a phosphorus atom to form a heteroatom-mediated ligand, at least one carbon atom of each of the alkyl, aryl, aralkyl and alkylaryl groups as the ligands is optionally replaced by a silicon atom, and each of the ligand having a cyclopentadienyl skeleton, the five-membered heterocyclic ligand having 1 to 4 carbon atoms and one or more heteroatoms selected from the group consisting of nitrogen, phosphorus, arsenic, antimony and bismuth, and the heteroatom tridentate ligand having coordinating atoms selected from the group consisting of nitrogen, phosphorus and oxygen is unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from the substituents, that each alkyl group as the substituent independently possesses a linear, a branched or a cyclic configuration, that at least one substituent of each substituted ligand is optionally bonded to the ligand through an oxygen, a nitrogen, a sulfur or a phosphorus atom, and that at least one carbon atom of at least one substituent of each substituted ligand is optionally replaced by a silicon atom;

a is an integer of 1 or more and each of b, c and d is an integer of from 0 to 3, with the proviso that $a+b+c+d = 4$ ;
each of $R^1$, $R^2$, $R^3$ and $R^4$ is bonded to the transition metal M;
$R^0$ represents a group which bridges $R^1$ with the ligand selected from $R^2$, $R^3$ and $R^4$ and, which is selected from the group consisting of a $C_1$-$C_{20}$ alkylene group, a $C_1$-$C_{20}$ substituted alkylene group, a $C_1$-$C_{20}$ alkylidene group, a silylene group and a substituted silylene group having at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group; and
x is 0 or 1.

In the present invention, it is preferred that the transision metal compound represented by the formula (1) be a compound having a structure such that $R^1$ is a ligand having a cyclopentadienyl skeleton, and one of $R^2$, $R^3$ and $R^4$ is a ligand having a cyclopentadienyl skeleton, a heteroatom tridentate ligand or a heteroatom-mediated ligand. Examples of such preferred transition metal compounds include a compound of formula (1) having a structure such that each of $R^1$ and $R^2$ is a ligand having a cyclopentadienyl skeleton, a compound of formula (1) having a structure such that $R^1$ is a ligand having a cyclopentadienyl skeleton and $R^2$ is a heteroatom tridentate ligand, and a compound of formula (1) having a structure such that $R^1$ is a ligand having a cyclopentadienyl skeleton and $R^2$ is a heteroatommediated ligand. In the compound of formula (1), at least two of the above-mentioned ligands may be linked to one another through an alkylene group, such as methylene, ethylene or propylene, a substituted alkylene group, such as diphenyl methylene, an alkylidene group, such as isopropylidene, a silylene group, a substituted silylene group, such as dimethyl silylene, diphenyl silylene or methyl phenyl silylene, or the like. In the compound of formula (1), each of $R^3$ and $R^4$ is independently a ligand having a cyclopentadienyl skeleton, an alkyl group, a cycloalkyl group, an aryl group, an aralkyl group, an alkoxy group, an aryloxy group, a halogen atom, a trialkylsilyl group, a $—SO_3R$ group or a hydrogen atom. In the present invention, it is especially preferred that each of $R^3$ and $R^4$ be independently an alkyl group, an aryl group, a halogen atom or the like.

Examples of ligands having a cyclopentadienyl skeleton, which can be used in the compound of formula (1), include a cyclopentadienyl group, alkyl-substituted cyclopentadienyl groups, such as a methylcyclopentadienyl group, a dimethylcyclopentadienyl group, a trimethylcyclopentadienyl group, a tetramethylcyclopentadienyl group, a pentamethylcyclopentadienyl group, an ethylcyclopentadienyl group, a methylethylcyclopentadienyl group, a propylcyclopentadienyl group, a methylpropylcyclopentadienyl group, a butylcyclopentadienyl group, a methylbutylcyclopentadienyl group and a hexylcyclopentadienyl group; an indenyl group; a 4,5,6,7-tetrahydroindenyl group; a fluorenyl group; and the like. These groups may be substituted with a halogen atom, a trialkylsilyl group or the like. Further, these groups may be substituted with a group containing a heteroatom which is capable of functioning as a coordinating atom.

Examples of five-membered heterocyclic ligands having 1 to 4 carbon atoms and one or more heteroatoms selected from the group consisting of nitrogen, phosphorus, arsenic, antimony and bismuth, which can be used in the compound of formula (1), include a pyrrolyl group, a phospholyl group, an arsolyl group, a stibolyl group, a bismolyl group and the like.

In the present invention, the heteroatom tridentate ligands having coordinating atoms selected from the group consisting of nitrogen, phosphorus and oxygen are ligands having a trispyrazolylborate skeleton or a trisphosphoranylmethanido skeleton. Specific examples of such heteroatom tridentate ligands include a hydrotrispyrazolylborate group and a trisbisphenyloxophosphoranylmethanido and the like.

Further, examples of heteroatom-mediated ligands formed by bonding the alkyl, aryl, alkylaryl or aralkyl group as the ligands to the transition metal through an oxygen, a nitrogen, a sulfur or a phosphorus atom include an amido group (—NR—) and a phosphido group (—PR—). Specific examples of amido groups include a tert-butylamido group, a methylamido group, an ethylamido group, a benzylamido group, a methoxyphenylamido group and the like. Specfic examples of phosphido groups include a phenylphosphido group and the like.

Examples of halogen atoms usable in the present invention are fluorine, chlorine, bromine and iodine.

In the ligand represented by the formula —$SO_3R$ in the compound of formula (1), R is a $C_1$-$C_8$ hydrocarbon group unsubstituted or substituted with at least one halogen atom, preferably a $C_1$-$C_8$ linear, branched or cyclic alkyl group or a $C_6$-$C_8$ aryl group. Specific examples of ligands represented by the formula —$SO_3R$ include a p-toluenesulfonato group, a methanesulfonato group, a trifluoromethanesulfonato group and the like.

Examples of transition metal compounds of formula (1) wherein M represents zirconium include bis(cyclopentadienyl)zirconium dichloride, bis(indenyl)zirconium dichloride, bis(indenyl)zirconium dibromide, bis(indenyl)zirconium bis(p-toluenesulfonato)bis(4,5,6,7-tetrahydroindenyl)zirconium dichloride, bis(fluorenyl)zirconium dichloride, ethylenebis(cyclopentadienyl)zirconium dichloride, ethylenebis(methylcyclopentadienyl)zirconium dichloride, ethylenebis(dimethylcyclopentadienyl)zirconium dichloride, ethylenebis(trimethylcyclopentadienyl)zirconium dichloride, ethylenebis(tetramethylcyclopentadienyl)zirconium dichloride, ethylenebis(indenyl)zirconium dichloride, ethylenebis(indenyl)zirconium dibromide, ethylenebis(indenyl)dimethylzirconium, ethylenebis(indenyl)diphenylzirconium, ethylenebis(indenyl)methylzirconium monochloride, ethylenebis(indenyl)zirconiumbis(methanesulfonato), ethylenebis(indenyl)zirconiumbis(p-toluenesulfonato), ethylenebis(indenyl)zirconiumbis(trifluoromethanesulfonato), ethylenebis(4,5,6,7-tetrahydroindenyl)zirconium dichloride, diphenylmethylene(cyclopentadienyl-fluorenyl)zirconium dichloride, isopropylidene(cyclopentadienyl-fluorenyl)zirconium dichloride, isopropylidene(cyclopentadienyl-methylcyclopentadienyl)zirconium dichloride, methylenebis(cyclopentadienyl)zirconium dichloride, methylenebis(methylcyclopentadienyl)zirconium dichloride, methylenebis(dimethylcyclopentadienyl)zirconium dichloride, methylenebis(trimethylcyclopentadienyl)zirconium dichloride, methylenebis(tetramethylcyclopentadienyl)zirconium dichloride, methylenebis(indenyl)zirconium dichloride, methylenebis(indenyl)zirconiumbis(trifluoromethanesulfonato), methylenebis(4,5,6,7-tetrahydroindenyl)zirconium dichloride, methylene(cyclopentadienylfluorenyl)zirconium dichloride, dimethylsilylenebis(cyclopentadienyl)zirconium dichloride, dimethylsilylenebis(methylcyclopentadienyl)zirconium dichloride, dimethylsilylenebis(dimethylcyclopentadienyl)zirconium dichloride, dimethylsilylenebis(trimethylcyclopentadienyl)zirconium dichloride, dimethylsilylenebis(tetramethylcyclopentadienyl)zirconium dichloride, dimethylsilylenebis(indenyl)zirconium dichloride, dimethylsilylenebis(indenyl)zirconiumbis(trifluoromethanesulfonato), dimethylsilylenebis(4,5,6,7-tetrahydroindenyl)zirconium dichloride, dimethylsilylene(cyclopentadienyl-fluorenyl)zirconium dichloride, diphenylsilylenebis(indenyl)zirconium dichloride, methylphenylsilylenebis(indenyl)zirconium dichloride, bis(methylcyclopentadienyl)zirconium dichloride, bis(dimethylcyclopentadienyl)zirconium dichloride, bis(dimethylcyclopentadienyl)zirconium ethoxychloride, bis(dimethylcyclopentadienyl) zirconiumbis(trifluoromethanesulfonato), bis(ethylcyclopentadienyl)zirconium dichloride, bis(methylethylcyclopentadienyl)zirconium dichloride, bis(propylcyclopentadienyl)zirconium dichloride, bis(methylpropylcyclopentadienyl)zirconium dichloride, bis(butylcyclopentadienyl)zirconium dichloride, bis(methylbutylcyclopentadienyl)zirconium dichloride, bis(methylbutylcyclopentadienyl) zirconiumbis(methanesulfonato), bis(trimethylcyclopentadienyl)zirconium dichloride, bis(tetramethylcy clopentadienyl)zirconium dichloride, bis(pentamethylcyclopentadienyl)zirconium dichloride, bis(hexylcyclopentadienyl)zirconium dichloride, bis(trimethylsilylcyclopentadienyl)zirconium dichloride, bis(tetramethylphospholyl)zirconium dichloride, bis(3,4-dimethylphospholyl)zirconium dichloride, hydrotrispyrazolylboratocyclopentadienylzirconium dichloride, tris(diphenyloxophosphoranyl)methanidocyclopentadienylzirconium dichloride, hydrotrispyrazolylboratozirconium trichloride, tris(diphenyloxophosphoranyl)methanidozirconium trichloride, hydrotris(3,5-dimethylpyrazolyl)boratozirconium trichloride, and tris(diphenyloxophosphoranyl)methanidopentamethylcyclopentadienylzirconium dichloride.

In the above-mentioned transition metal compounds, the di-substituted cyclopentadienyl ring thereof may be of a 1,2-substituted or a 1,3-substituted configuration, and the tri-substituted cyclopentadienyl ring thereof may be of a 1,2,3-substituted or a 1,2,4-substituted configuration. Further, the alkyl group, such as a propyl group or a butyl group, includes isomers thereof, such as n-, iso-, sec- and tert-isomers thereof.

In the present invention, those transition metal compounds, which have the same structures as the structures of the above-mentioned zirconium compounds of formula (1) except that the zirconium is replaced by titanium or hafnium, can also be employed.

Further examples of transition metal compounds of formula (1) include (tert-butylamido)(tetramethyl-$\eta^5$-cyclopentadienyl)-1,2-ethanediylzirconium dichloride, (tert-butylamido)(tetramethyl-$\eta^5$-cyclopentadienyl)-1,2-ethanediyltitanium dichloride, (tert-butylamido)(tetramethyl-$\eta^5$-cyclopentadienyl)methylenezirconium dichloride, (tert-butylamido)(tetramethyl-$\eta^5$-cyclopentadienyl)methylenetitanium dichloride, (tert-butylamido)(tetramethyl-$\eta^5$-cyclopentadienyl)methylenezirconium dimethyl, (tert-butylamido)(tetramethyl-$\eta^5$-cyclopentadienyl)methylenetitanium dimethyl, (tert-butylamido)(tetramethyl-$\eta^5$-cyclopentadienyl)isopropylidenezirconium dichloride, (tert-butylamido)(tetramethyl-$\eta^5$-cyclopentadienyl)isopropylidenetitanium dichloride, (tert-butylamido)(tetramethyl-$\eta^5$-cyclopentadienyl)isopropylidenezirconium dimethyl, (tert-butylamido)(tetramethyl-$\eta^5$-cyclopentadienyl)isopropylidenetitanium dimethyl, (tert-butyla-

mido)(tetramethyl-η $^5$-cyclopentadienyl)-1,2-ethanediylzirconium dimethyl, (tert-butylamido)(tetramethyl-η $^5$-cyclopentadienyl)-1,2-ethanediyltitanium dimethyl, (methylamido)(tetramethyl-η $^5$-cyclopentadienyl)-1,2-ethanediylzirconium dichloride, (methylamido)(tetramethyl-η $^5$-cyclopentadienyl)-1,2-ethanediyltitanium dichloride, (methylamido)(tetramethyl-η $^5$-cyclopentadienyl)-1,2-ethanediylzirconium dibenzyl, (methylamido)(tetramethyl-η $^5$-cyclopentadienyl)-1,2-ethanediyltitanium dimethyl, (methylamido)dimethyl(tetramethyl-η $^5$-cyclopentadienyl)silanetitanium dichloride, (methylamido)dimethyl(tetramethyl-η $^5$-cyclopentadienyl)silanezirconium dichloride, (ethylamido)(tetramethyl-η $^5$-cyclopentadienyl)-methylenetitanium dichloride, (ethylamido)(tetramethyl-η $^5$-cyclopentadienyl)-methylenetitanium dimethyl, (tert-butylamido)dimethyl(tetramethyl-η $^5$-cyclopentadienyl)silanetitanium dichloride, (tert-butylamido)dimethyl(tetramethyl-η $^5$-cyclopentadienyl)silanezirconium dichloride, (tert-butylamido)dibenzyl(tetramethyl-η $^5$-cyclopentadienyl)silanezirconium dibenzyl, (tert-butylamido)dimethyl(tetramethyl-η $^5$-cyclopentadienyl)silanezirconium dibenzyl, (benzylamido)dimethyl(tetramethyl-η $^5$-cyclopentadienyl)silanetitanium dichloride, (benzylamido)dimethyl(tetramethyl-η $^5$-cyclopentadienyl)silanetitanium diphenyl, (phenylphosphido)dimethyl(tetramethyl-η $^5$-cyclopentadienyl)silanezirconium dibenzyl, (phenylphosphido)dimethyl(tetramethyl-η $^5$-cyclopentadienyl)silanetitanium dichloride, (phenylphosphido)dimethyl(tetramethyl-η $^5$-cyclopentadienyl)silanezirconium dichloride, (2-methoxyphenylamido)dimethyl(tetramethyl-η $^5$-cyclopentadienyl)silanetitanium dichloride, (4-fluorophenylamido)dimethyl(tetramethyl-η $^5$-cyclopentadienyl)silanetitanium dichloride, [{2,6-di(1-methylethyl)phenyl}amido]dimethyl(tetramethyl-η $^5$-cyclopentadienyl)amidotitanium dichloride, (4-methoxyphenylamido)dimethyl(tetramethyl-η $^5$-cyclopentadienyl)silanetitanium dichloride, (tetramethyl-η $^5$-cyclopentadienyl)dimethyl(1-methylethoxy)silanetitanium trichloride, 1-(tert-butylamido)-2-(tetramethyl-η $^5$-cyclopentadienyl)-1,1,2,2-tetramethyldisilanetitanium dichloride, 1-(tert-butylamido)-2-(tetramethyl-η $^5$-cyclopentadienyl)-1,1,2,2-tetramethyldisilanezirconium dichloride, (tert-butylamido)dimethyl(tetramethyl-η $^5$-cyclopentadienyl)silanezirconium dimethyl, (tert-butylamido)dimethyl(η $^5$-cyclopentadienyl)silanetitanium dichloride, (tert-butylamido)dimethyl(η $^5$-cyclopentadienyl)silanezirconium dichloride, (anilido)dimethyl(tetramethyl-η $^5$-cyclopentadienyl)silanetitanium dichloride, (anilido)dimethyl(tetramethyl-η $^5$-cyclopentadienyl)silanezirconium dichloride, and the like.

As mentioned above, a transition metal compound as component (A) of the catalyst system of the present invention is a transition metal compound containing a multidentate ligand and/or monodentate ligand. With respect to the details of a transition metal compound containing a multidentate ligand, reference can be made to, for example, EP 0 617 052A.

In the catalyst system of the present invention, by appropriately selecting the type of component (A), it is possible to control, for example, the molecular weight of a polymer obtained and the structural composition of a copolymer obtained. Further, in the catalyst system of the present invention, by appropriately selecting at least two types of component (A), it becomes possible to widely control the molecular structures of a polymer, such as the molecular weight and molecular weight distribution of a homopolymer or copolymer obtained, the comonomer composition and the distribution therein of a copolymer, and the type and amount of long chain branching.

By controlling the molecular structures and the like of a polymer in the above-mentioned manner, it becomes possible to control various properties of the polymer, such as melt tension, melt strength, stiffness, strength, impact resistance, environmentalstress-crack resistance, extrusion moldability, bubble stability, swell characteristics, solvent resistance, transparency and the like.

With respect to component (B) of the catalyst system of the present invention, it is preferred that the particulate inorganic solid (b-1) having hydroxyl groups on the surface thereof [hereinbelow, frequently referred to simply as "particulate inorganic solid (b-1)" or "component (b-1)"] have a pore volume (PV: $cm^3/g$) of from 0.4 to 1.4 $cm^3/g$ and a specific surface area (SA: $m^2/g$) of from 150 to 800 $m^2/g$, with the proviso that the pore volume (PV: $cm^3/g$) and the specific surface area (SA: $m^2/g$) satisfy the following relationship.

$$SA \leqq -625 \times PV + 1100 \qquad (2)$$

As mentioned above, in the catalyst system of the present invention, it is preferred that the particulate inorganic solid (b-1) have a pore volume (PV: $cm^3/g$) of from 0.4 to 1.4 $cm^3/g$.

When the pore volume of the particulate inorganic solid (b-1) is less than 0.4 $cm^3/g$, the amount of an organoaluminumoxy compound carried on the particulate inorganic solid (b-1) becomes too small, so that the resultant catalyst system cannot exhibit a satisfactorily high polymerization activity. Therefore, in the catalyst system of the present invention, it is preferred that the pore volume of the particulate inorganic solid (b-1) be 0.4 $cm^3/g$ or more, more preferably 0.5 $cm^3/g$ or more, most preferably 0.6 $cm^3/g$ or more.

When the pore volume of the particulate inorganic solid (b-1) is more than 1.4 $cm^3/g$, the pore volume of the particulate inorganic solid (b-1) is too large, so that it becomes difficult to obtain a particulate inorganic solid having satisfactorily high mechanical strength. In this case, breakage of the particulate inorganic solid is likely to occur during the polymerization, so that the resultant polymer contains particles formed by breakage of the particulate inorganic solid. As a result, various disadvantages are likely to be caused such that the powder characteristics of the polymer are caused to deteriorate, and that the bulk density of the polymer becomes low. Therefore, in the catalyst system of the

present invention, it is preferred that the pore volume of the particulate inorganic solid (b-1) be 1.4 $cm^3/g$ or less, more preferably 1.2 $cm^3/g$ or less, still more preferably 1.1 $cm^3/g$ or less, most preferably 1.0 $cm^3/g$ or less.

As mentioned above, in the catalyst system of the present invention, it is preferred that the particulate inorganic solid (b-1) have a specific surface area (SA: $m^2/g$) of from 150 to 800 $m^2/g$.

When the specific surface area of the particulate inorganic solid (b-1) is less than 150 $m^2/g$, the amount of an organoaluminumoxy compound carried on the particulate inorganic solid (b-1), per unit weight of the particulate inorganic solid (b-1), becomes too small, so that the polymerization activity per unit weight of the particulate inorganic solid becomes low. Therefore, in the catalyst system of the present invention, it is preferred that the specific surface area of the particulate inorganic solid (b-1) be 150 $m^2/g$ or more, more preferably 200 $m^2/g$ or more, most preferably 250 $m^2/g$ or more.

When the specific surface area of the particulate inorganic solid (b-1) is more than 800 $m^2/g$, it becomes difficult to perform a uniform polymerization reaction over the entire surface of the catalyst. In this case, it is likely that a vigorous polymerization reaction locally occurs in the surface of the catalyst. As a result, various disadvantages are likely to be caused, such that the powder characteristics of the resultant polymer become poor, and that the bulk density of the polymer becomes low. Therefore, in the catalyst system of the present invention, it is preferred that the specific surface area of the particulate inorganic solid (b-1) be 800 $m^2/g$ or less, more preferably 700 $m^2/g$ or less, most preferably 600 $m^2/g$ or less.

As mentioned above, in the catalyst system of the present invention, it is preferred that the particulate inorganic solid (b-1) have a pore volume (PV: $cm^3/g$) and a specific surface area (SA: $m^2/g$) within the above-mentioned respective ranges, with the proviso that the pore volume (PV: $cm^3/g$) and the specific surface area (SA: $m^2/g$) satisfy the following relationship.

$$SA \leqq -625 \times PV + 1100 \qquad (2)$$

For example, in the case of a particulate silica having a pore volume (PV: $cm^3/g$) of 1.0 $cm^3/g$ and a specific surface area (SA: $m^2/g$) of 300 $m^2/g$, a value of the right side of the formula (2) is 475, and a value of the left side of the formula (2) is 300. Therefore, the pore volume and specific surface area of this particulate silica satisfy the relationship of formula (2).

When the pore volume (PV: $cm^3/g$) and the specific surface area (SA: $m^2/g$) of the silica does not satisfy the relationship of formula (2), it is likely that the silica suffers minute cracking. The cracks continue to grow during the polymerization, leading to a breakage of the silica, so that the resultant polymer contains the particles formed by the breakage of the silica. As a result, various disadvantages are likely to be caused, such that the powder characteristics of the polymer are lowered to a commercially undesirable level and, in some cases, the bulk density of the polymer becomes considerably low.

Further, when a particulate silica is used as the particulate inorganic solid (b-1) of the catalyst system of the present invention, it is preferred that the pore volume (PV: $cm^3/g$) and the specific surface area (SA: $m^2/g$) of the silica satisfy the relationship of formula (2), more preferably the relationship of the following formula (3):

$$SA \leqq -625 \times PV + 1000 \qquad (3)$$

As mentioned above, particulate inorganic solid (b-1) of component (B) of the catalyst system of the present invention has hydroxyl groups on the surface thereof.

In the present invention, the hydroxyl groups on the surface of the particulate inorganic solid (b-1) are OH groups which are strongly bonded to the surface of the particulate inorganic solid even under polymerization conditions, and which react with one another to generate $H_2O$ when heated at a high temperature. Such hydroxyl groups are not simply adsorbed onto the surface of the particulate inorganic solid (b-1) but are chemically bonded to the surface matrix of the particulate inorganic solid (b-1). For example, when a silica having hydroxyl groups on the surface thereof is used as particulate inorganic solid (b-1), it is considered that each hydroxyl group forms an Si-OH bond with a silicon atom of the silica. The hydroxyl group having such a chemical bond is not easily liberated from the silica, even when, for example, contacted with an inert solvent.

In the present invention, the hydroxyl group content of the particulate inorganic solid (b-1) is determined by subjecting the particulate inorganic solid to heat treatment at 1000 °C under atmospheric pressure. The hydroxyl group content of particulate inorganic solid (b-1) is defined as a ratio (% by weight) of the weight of the particulate inorganic solid which is reduced by the heat treatment to the weight of the particulate inorganic solid before the heat treatment.

In the present invention, it is preferred that the hydroxyl group content of the particulate inorganic solid (b-1) be sufficient for bonding the organoaluminumoxy compound (b-2) having alkyl groups to the particulate inorganic solid (b-1). When the the hydroxyl group content is too large relative to the amount of the organoaluminumoxy compound (b-2), the alkyl groups in the organoaluminumoxy compound (b-2) are destroyed by the hydroxyl groups, so that the resultant catalyst system cannot exhibit a satisfactory polymerization activity. When the hydroxyl group content is too small, the

bonding of the organoaluminumoxy compound to the particulate inorganic solid cannot be effectively performed. With respect to the mechanism of the bonding between the particulate inorganic solid (b-1) and the organoaluminumoxy compound (b-2), it is considered that a hydroxyl group on the particulate inorganic solid (b-1) reacts with an alkyl group in the organoaluminumoxy compound (b-2) to form an O-Al bond, thereby performing the bond between (b-1) and (b-2). For example, when silica as the particulate inorganic solid (b-1) is contacted with methylaluminoxane as the organoaluminumoxy compound (b-2), the generation of methane gas is observed. The reason for the generation of methane gas can be explained as follows. A methyl group in methylaluminoxane reacts with a hydroxyl group (OH group) on the surface of the silica, to thereby form an O-Al bond and methane ($CH_4$) which is released in a gaseous form. Therefore, when the hydroxyl group content of the particulate inorganic solid (b-1) is too small relative to the amount of organoaluminumoxy compound (b-2), the number of O-Al bonds formed by the reaction of a hydroxyl group on the particulate inorganic solid (b-1) with an alkyl group in the organoaluminumoxy compound (b-2) also becomes too small, so that it becomes difficult to bond a desired amount of the organoaluminumoxy compound (b-2) to the particulate inorganic solid (b-1). In the present invention, the molar ratio ($OH/Al_{b-2}$) of a hydroxyl group (OH group) on the surface of the particulate inorganic solid (b-1) to aluminum ($Al_{b-2}$) in organoaluminumoxy compound (b-2) is preferably in the range of from 0.01 to 1, more preferably from 0.05 to 0.7.

For the organoaluminumoxy compound (b-2) to be bonded to the particulate inorganic solid (b-1) in an effective amount for polymerization, the hydroxyl group content of the particulate inorganic solid (b-1) is preferably 0.5 % by weight or more, more preferably 1 % by weight or more. However, when the hydroxyl group content of the particulate inorganic solid (b-1) is too large, the polymerization activity of the resultant catalyst system is likely to become low. The reason for this has not been elucidated yet, but considered to be as follows. When the hydroxyl group content is too large, the sites for reaction with the alkyl groups in the organoaluminumoxy compound (b-2) is caused to be excessively present on the surface of the particulate inorganic solid (b-1), so that the effect of the organoaluminumoxy compound as an auxiliary catalyst for the polymerization is lowered. That is, when the hydroxyl group content of the surface of the particulate inorganic solid (b-1) is too large, the polymerization activity of the resultant catalyst system is likely to be lowered. Therefore, in the present invention, the upper limit of the hydroxyl group content is preferably 15 % by weight or less, more preferably 12 % by weight or less, most preferably 10 % by weight or less.

In the present invention, the hydroxyl group content of the particulate inorganic solid (b-1) can be adjusted to a predetermined level within the range of from 0.5 to 15 % by weight, by subjecting a particulate inorganic solid having hydroxyl groups on the surface thereof to heat treatment at an appropriate temperature. This heat treatment is advantageously employed when the hydroxyl group content of component (b-1) is more than 15 % by weight, or when it is desired to further lower the hydroxyl group content of component (b-1) having a hydroxyl group content of less than 15 % by weight. The heat treatment for adjusting the hydroxyl group content of particulate inorganic solid (b-1) is conducted preferably at 150 °C or more, more preferably 200 °C or more, and preferably 1000 °C or less, more preferably 800 °C or less.

In the present invention, by contacting a particulate inorganic solid (b-1) having hydroxyl groups on the surface thereof with an organoaluminum compound, also, a particulate inorganic solid (b-1) having a hydroxyl group content adjusted to a predetermined level can be obtained. With respect to the temperature at which a particulate inorganic solid (b-1) having hydroxyl groups on the surface thereof is contacted with an organoaluminum compound, there is no particular limitation. However, it is preferred that the contact temperature be room temperature or an elevated temperature at 100 °C or less. It is believed that the reason why the adjustment of the hydroxyl group content of a particulate inorganic solid (b-1) can be performed by contacting the particulate inorganic solid (b-1) with an organoaluminum compound resides in that hydroxyl groups react with the organoaluminum compound to become chemically inactive.

In the present invention, the use of an organoaluminum compound has also an advantage that the amount of the organoaluminumoxy compound (b-2) to be used can be reduced.

An example of the organoaluminum compounds which can be used in the present invention is one which is represented by the following formula (4):

$$R^5{}_nAlX_{3-n} \qquad (4)$$

wherein $R^5$ represents a $C_1$-$C_{12}$ linear, branched or cyclic alkyl group or a $C_6$-$C_{20}$ aryl group; X represents a halogen atom or a hydrogen atom; and n is an integer of from 1 to 3.

Examples of $R^5$ in formula (4) include a methyl group, an ethyl group, an n-propyl group, an isopropyl group, an isobutyl group, a pentyl group, a hexyl group, an octyl group, a cyclopentyl group, a cyclohexyl group, a phenyl group and a tolyl group.

Specific examples of organoaluminum compounds defined above include a trialkylaluminum, such as trimethylaluminum, triethylaluminum, triisopropylaluminum, triisobutylaluminum, trioctylaluminum, and tri 2-ethylhexylaluminum; an alkenylaluminum, such as isoprenylaluminum; a dialkylaluminum halide, such as dimethylaluminum chloride, diethylaluminum chloride, diisopropylaluminum chloride, diisobutylaluminum chloride, and dimethylaluminum bromide; an alkylaluminum sesquihalide, such as methylaluminum sesquichloride, ethylaluminum sesquichloride, isopropylaluminum

sesquichloride, butylaluminum sesquichloride, and ethylaluminum sesquibromide; an alkylaluminum dihalide, such as methylaluminum dichloride, ethylaluminum dichloride, isopropylaluminum dichloride, and ethylaluminum dibromide; and a dialkylaluminum hydride, such as diethylaluminum hydride, and diisobutylaluminum hydride.

In the present invention, when an organoaluminum compound is used for adjusting the hydroxyl group content of the surface of a particulate inorganic solid to a predetermined level, the amount of the organoaluminum compound to be used is such as would provide an $Al_R$/OH molar ratio of 1 or less, wherein $Al_R$ is the amount of the aluminum contained in the organoaluminum compound and OH is the amount of the hydroxyl groups on the surface of the particulate inorganic solid.

In the present invention, when an organoaluminum compound is used for adjusting the hydroxyl group content of the surface of a particulate inorganic solid to a predetermined level, component (B) is usually prepared by contacting the particulate inorganic solid with the organoaluminum compound to obtain particulate inorganic solid (b-1) having a hydroxyl group content adjusted to the predetermined level, and contacting the particulate inorganic solid (b-1) with organoaluminumoxy compound (b-2), thereby causing the organoaluminumoxy compound (b-2) to be carried on the particulate inorganic solid (b-1). Alternatively, component (B) may also be prepared by contacting the particulate inorganic solid with a mixture of organoaluminumoxy compound (b-2) and the organoaluminum compound to simultaneously effect an adjustment of the hydroxyl group content of the particulate inorganic solid to the predetermined level and a contact of the particulate inorganic solid with the organoaluminumoxy compound (b-2), thereby causing the organoaluminumoxy compound (b-2) to be carried on the particulate inorganic solid (b-1).

When the adjustment of the hydroxyl group content of the particulate inorganic solid (b-1) is performed by heating without using an organoaluminum compound, the molar ratio ($OH/Al_{b-2}$) of a hydroxyl group (OH group) on the surface of the particulate inorganic solid (b-1) to aluminum ($Al_{b-2}$) in organolauminumoxy compound (b-2) is preferably in the range of from 0.01 to 1, more preferably from 0.05 to 0.7. When the organoaluminum compound is used in adjusting the hydroxyl group content of the surface of a particulate inorganic solid to a predetermined level, the sum of the molar amount of aluminum ($Al_{b-2}$) in organoaluminumoxy compound (b-2) and the molar amount of aluminum ($Al_R$) in the organoaluminum compound is taken as the molar amount of $Al_{b-2}$ in calculating the molar ratio ($OH/Al_{b-2}$) of the hydroxyl groups (OH) on the surface of the particulate inorganic solid to the aluminum ($Al_{b-2}$) in organoaluminumoxy compound (b-2) with respect to component (B). Acordingly, in the present invention, when the organoaluminum compound is used in adjusting the hydroxyl group content of the surface of a particulate inorganic solid to a predetermined level, with respect to the molar ratio [$OH/(Al_{b-2} + Al_R)$] of the hydroxyl groups (OH) on the surface of the particulate inorganic solid to the sum of the molar amount of aluminum ($Al_{b-2}$) in organoaluminumoxy compound (b-2) and the molar amount of aluminum ($Al_R$) in the organoaluminum compound, the upper limit is preferably 1 or less, more preferably 0.7 or less, and the lower limit is preferably 0.01 or more, more preferably 0.05 or more.

In the present invention, when an organoaluminum compound is used for adjusting the hydroxyl group content of the surface of a particulate inorganic solid to a predetermined level, the molar ratio ($Al_R/Al_{b-2}$) of the aluminum ($Al_R$) in the organoaluminum compound to the aluminum ($Al_{b-2}$) in organoaluminumoxy compound (b-2) is preferably 1 or less.

As described above, in the present invention, it is preferred that, in component (B), the particulate inorganic solid (b-1) having hydroxyl groups on the surface thereof have a pore volume (PV: $cm^3/g$) of from 0.4 to 1.4 $cm^3/g$ and a specific surface area (SA: $m^2/g$) of from 150 to 800 $m^2/g$, with the proviso that the pore volume (PV: $cm^3/g$) and the specific surface area (SA: $m^2/g$) satisfy the relationship represented by the formula (2):

$$SA \leqq -625 \times PV + 1100 \qquad (2)$$

By using a particulate inorganic solid (b-1) satisfying the above conditions, an organoaluminumoxy compound (b-2) can be especially strongly bonded to the particulate inorganic solid (b-1), and an olefin polymer containing no very fine particles and exhibiting excellent powder characteristics and a high bulk density can be more effectively produced without conducting a preliminary polymerization.

As a material for the particulate inorganic solid (b-1), a particulate inorganic porous material is preferred. Examples of main components of particulate inorganic porous materials include oxides, such as $SiO_2$, $Al_2O_3$, MgO, $MgCl_2$, $ZrO_2$, $TiO_2$, $B_2O_3$, CaO, ZnO, BaO, $V_2O_5$, $Cr_2O_3$, and ThO. These oxides are used individually or in mixture thereof, or in the form of a composite oxide thereof. Examples of such composite oxides include $SiO_2$-MgO, $SiO_2$-$Al_2O_3$, $SiO_2$-$TiO_2$, $SiO_2$-$V_2O_5$, $SiO_2$-$Cr_2O_3$, and $SiO_2$-$TiO_2$-MgO. It is preferred that the main component of the material for the particulate inorganic solid (b-1) be at least one member selected from the group consisting of $SiO_2$, $Al_2O_3$, MgO and $MgCl_2$.

In the present invention, among the above-mentioned examples of materials for the particulate inorganic solid (b-1), a particulate silica composed mainly of $SiO_2$ is especially preferred.

With respect to a method for preparing such a particulate silica, there is no particular limitation, but a sol-gel process is preferred. In the present invention, the term "sol-gel process" means a process in which solation and gelation are conducted to obtain a particulate silica. The sol-gel process comprises, for example, reacting a solution of sodium silicate with sulfuric acid to form silicic acid, subjecting the formed silicic acid to polycondensation to thereby form a silicate polymer in the form of a colloidal silica (silica hydrosol), subjecting the obtained silica hydrosol to gelation to thereby

obtain a silica hydrogel, and drying the silica hydrogel to thereby produce a silica xerogel. By combining such a sol-gel process with another process, such as a hydrothermal process, various properties of a particulate silica, such as a pore volume, a specific surface area, a particle morphology and a particle size, can be controlled relatively easily. It is also possible to control the chemical properties of the particulate silica by incorporating therein elements other than silicon, such as aluminum and titanium, in the form of individual oxides thereof. Therefore, in the present invention, a particulate silica may contain such additives, that is, aluminum oxide, titanium oxide and the like.

In the present invention, with respect to the shape of the particulate inorganic solid (b-1), there is no particular limitation, but a spherical shape is preferred. In the present invention, the term "spherical shape" means a shape which has no edges and is close to a sphere as a whole.

In the present invention, the average particle diameter of the particulate inorganic solid (b-1) is 5 μm or more, preferably 10 μm or more, and 200 μm or less, preferably 100 μm or less.

A particulate silica having such a spherical shape and such an average particle diameter can be obtained easily by the above-mentioned sol-gel process.

In the present invention, the organoaluminumoxy compound (b-2) (hereinbelow, frequently referred to as "component (b-2)") is an aluminoxane having repeating alkylaluminumoxy units each represented by the formula (5)

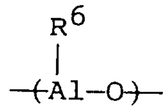

(5)

wherein $R^6$ represents a $C_1$-$C_{12}$ linear, branched or cyclic alkyl group.

Representative examples of $R^6$ in the formula (5) include a methyl group, an ethyl group, an n-propyl group, an isopropyl group, an n-butyl group, an isobutyl group, a pentyl group, a hexyl group, an octyl group, a decyl group, a cyclohexyl group and a cyclooctyl group. Among these, a methyl group and an ethyl group are preferred, and a methyl group is especially preferred. Representative examples of organoaluminumoxy compounds having repeating alkylaluminumoxy units of a single type represented by the formula (5) include methylaluminoxane, ethylaluminoxane, n-propylaluminoxane, isopropylaluminoxane, n-butylaluminoxane, isobutylaluminoxane, pentylaluminoxane, hexylaluminoxane, octylaluminoxane, decylaluminoxane, cyclohexylaluminoxane and cyclooctylaluminoxane. Among these, methylaluminoxane, ethylaluminoxane and isobutylaluminoxane are preferred, and methylaluminoxane is especially preferred. In the present invention, the organoaluminumoxy compound having repeating alkylaluminumoxy units each represented by the formula (5) is not limited to an organoaluminumoxy compound having repeating alkylaluminumoxy units of one type represented by the formula (5), but may have two or more different types of repeating alkylaluminumoxy units each represented by the formula (5). Examples of such organoaluminumoxy compounds having two or more different types of repeating alkylaluminumoxy units each represented by the formula (5) include ethylmethylaluminoxane, methylpropylaluminoxane and butylmethylaluminoxane. The respective proportions of individual types of repeating alkylaluminumoxy units in such an organoaluminumoxy compound can be arbitrarily selected between 0 % and 100 %. A plurality of types of organoaluminumoxy compounds each having repeating alkylaluminumoxy units of a single type each represented by the formula (5), may be used in combination. Examples of such combinations include a mixture of methylaluminoxane and ethylaluminoxane, a mixture of methylaluminoxane and n-propylaluminoxane, and a mixture of methylaluminoxane and isobutylaluminoxane.

The degree of polymerization of an aluminoxane is generally from 2 to 100, preferably from 4 to 40.

In the present invention, the organoaluminumoxy compound (b-2) to be used as an auxiliary catalyst may contain unreacted chemical substances derived from the raw materials used in the synthesis of component (b-2). As is well known, an organoaluminumoxy compound is synthesized generally by reacting a trialkylaluminum with $H_2O$, and a part of these starting materials may remain unreacted. An organoaluminumoxy compound, which contains these unreacted materials in an amount of less than 50 % by weight, can be used as component (b-2). Specifically, for example, methylaluminoxane is synthesized by reacting trimethylaluminum with $H_2O$, and a part of at least one of these starting materials may remain unreacted and thus be contained in the obtained methylaluminoxane. In the above-mentioned synthesis method of an organoaluminumoxy compound, trialkylaluminum is generally used, in an amount larger than that of $H_2O$ so that the trialkylaluminum, as an unreacted material, tends to be contained in the obtained organoaluminumoxy compound.

In the present invention, the inorganic solid component (B) (hereinbelow, frequently referred to simply as "component (B)") comprising a particulate inorganic solid (b-1) having hydroxyl groups on the surface thereof and, carried thereon, an organoaluminumoxy compound (b-2), can be prepared by contacting the particulate inorganic solid (b-1) with the organoaluminumoxy compound (b-2). It is considered that, by the contacting, component (b-1) reacts with component (b-2).

Such a reaction can be advanced by mixing and heating the particulate inorganic solid (b-1) and the organoaluminumoxy compound (b-2) in an inert hydrocarbon medium.

Representative examples of such inactive hydrocarbon media include aliphatic hydrocarbons, such as propane, butane, pentane, hexane, heptane, octane, decane, dodecane and kerosine; alicyclic hydrocarbons such as cyclopentane, cyclohexane and methylcyclopentane; aromatic hydrocarbons such as benzene, toluene and xylene; halogenated hydrocarbons such as ethyl chloride, chlorobenzene and dichloromethane; and mixtures of them.

When mixing component (b-1) with component (b-2) in an inert hydrocarbon medium, it is preferred that the amount of component (b-2) be in the range of from $10^{-4}$ to 1 mol per g of component (b-1), more preferably from $10^{-3}$ to $10^{-1}$ mol per g of component (b-1), and that the concentration of component (b-2) in the inert hydrocarbon medium be in the range from 5 x $10^{-2}$ to 5 mol/liter, more preferably from 0.1 to 3 mol/liter.

In the present invention, the molar amount of component (b-2) is calculated, assuming that one alkylaluminumoxy unit represented by formula (5) is one molecule. Therefore, 1 mol of component (b-2) contains 1 gram-atom of aluminum.

When mixing component (b-1) with component (b-2), the reaction temperature is generally in the range of from -50 to 150 °C, preferably from -20 to 120 °C. However, it is not necessary to maintain the temperature in the above range during the mixing. Since the reaction of component (b-1) with component (b-2) is exothermic, it is preferred to control the reaction temperature to a level as low as possible at the early stage of the reaction and the temperature is elevated at the late stage of the reaction in order to complete the reaction. Specifically, the temperature at the early stage of the reaction is preferably in the range of from -50 to 50 °C, more preferably of from -20 to 30 °C, and the temperature at the late stage of the reaction is preferably in the range of from 50 to 150 °C, more preferably of from 60 to 120 °C. The contact time between component (b-1) and component (b-2) is in the range of from 0.5 to 100 hours, preferably from 1 to 50 hours.

In the present invention, the larger the atomic ratio ($Al_{b-2}$/M) of the aluminum ($Al_{b-2}$) in component (b-2) to the transition metal (M) in component (A), the higher the catalytic activity becomes, and thus the more advantageous it becomes from the view of cost. However, component (b-2) is generally expensive and, therefore, when the above-mentioned atomic ratio is excessively high, the economic advantage becomes rather low. Therefore, with respect to the atomic ratio ($Al_{b-2}$/M) of the aluminum ($Al_{b-2}$) in component (b-2) to the transition metal (M) in component (A), the upper limit is preferably 2,000, more preferably 1,000, most preferably 500, and the lower limit is preferably 10, more preferably 20, still more preferably 30, most preferably 100.

The amount of the organoaluminumoxy compound (b-2) carried on the particulate inorganic solid (b-1) is preferably in the range of from 0.5 to 500 mmol, more preferably from 1 to 50 mmol, most preferably from 3 to 30 mmol per g of component (b-1), in terms of the amount of aluminum ($Al_{b-2}$) in component (b-2).

In the present invention, examples of organoaluminum compound (C) (hereinbelow, frequently referred to simply as "component (C)") include an organoaluminum compound represented by the formula (6)

$$R^7{}_nAlX_{3-n} \qquad (6)$$

wherein $R^7$ represents a $C_1$-$C_{12}$ linear, branched or cyclic alkyl group or a $C_6$-$C_{20}$ aryl group; X represents a halogen atom or a hydrogen atom; and n is an integer of from 1 to 3.

Representative examples of $R^7$ in the formula (6) include a methyl group, an ethyl group, an n-propyl group, an isopropyl group, an isobutyl group, a pentyl group, a hexyl group, an octyl group, a cyclopentyl group, a cyclohexyl group, a phenyl group and a tolyl group.

Illustrative examples of organoaluminum compounds of formula (6) include trialkylaluminums, such as trimethylaluminum, triethylaluminum, triisopropylaluminum, triisobutylaluminum, trioctylaluminum and tri-2-ethylhexylaluminum; alkenylaluminums, such as isoprenylaluminum; dialkylaluminum halides, such as dimethylaluminum chloride, diethylaluminum chloride, diisopropylaluminum chloride, diisobutylaluminum chloride and dimethylaluminum bromide; alkylaluminum sesquihalides, such as methylaluminum sesquichloride, ethylaluminum sesquichloride, isopropylaluminum sesquichloride, butylaluminum sesquichloride and ethylaluminum sesquibromide; alkylaluminum dihalides, such as methylaluminum dichloride, ethylaluminum dichloride, isopropylaluminum dichloride and ethylaluminum dibromide; and alkylaluminum hydrides, such as diethylaluminum hydride and diisobutylaluminum hydride.

As another example of component (C), a compound represented by the following formula (7) can be mentioned:

$$R^7{}_nAlY_{3-n} \qquad (7)$$

wherein $R^7$ is as defined for formula (6); Y represents an $-OR^8$ group, an $-OSiR^9_3$ group, an $-OAlR^{10}_2$ group, an $-NR^{11}_2$ group, an $-SiR^{12}_3$ group or an $-N(R^{13})AlR^{14}_2$ group, wherein each of $R^8$, $R^9$, $R^{10}$ and $R^{14}$ independently represents a $C_1$-$C_{12}$ alkyl group or a $C_6$-$C_{20}$ aryl group, $R^{11}$ represents a hydrogen atom, a $C_1$-$C_{12}$ alkyl group, a $C_6$-$C_{20}$ aryl group, or a silyl group which is unsubstituted or substituted with at least one $C_1$-$C_{12}$ alkyl group, and each of $R^{12}$ and

$R^{13}$ independently represents a $C_1$-$C_{12}$ alkyl group, with the proviso that each alkyl group independently possesses a linear, a branched or a cyclic configuration; and n is 1 or 2.

Illustrative examples of organoaluminum compounds represented by formula (7) include the following compounds:

(i) compounds represented by the formula: $R^7_nAl(OR^8)_{3-n}$ (for example, dimethylaluminum methoxide, diethylaluminum ethoxide and diisobutylaluminum methoxide and the like);
(ii) compounds represented by the formula: $R^7_nAl(OSiR^9_3)_{3-n}$ [for example, $Et_2Al(OSiMe_3)$, (iso-Bu)$_2$Al(OSiMe$_3$), (iso-Bu)$_2$Al(OSiEt$_3$) and the like];
(iii) compounds represented by the formula: $R^7_nAl(OAlR^{10}_2)_{3-n}$ [for example, $Et_2AlOAlEt_2$, (iso-Bu)$_2$AlOAl(iso-Bu)$_2$ and the like];
(iv) compounds represented by the formula: $R^7_nAl(NR^{11}_2)_{3-n}$ [for example, $Me_2AlNEt_2$, $Et_2AlNHMe$, $Me_2AlNHEt$, $Et_2AlN(SiMe_3)_2$, (iso-Bu)$_2$AlN(SiMe$_3$)$_2$ and the like];
(v) compounds represented by the formula: $R^7_nAl(SiR^{12}_3)_{3-n}$ [for example, (iso-Bu)$_2$AlSiMe$_3$ and the like]; and
(vi) compounds represented by the formula:

$$R^7_nAl(\underset{\displaystyle R^{13}}{\underset{|}{N}}AlR^{14}_2)_{3-n}$$

[for example,

$$Et_2Al\underset{\displaystyle Me}{\underset{|}{N}}AlEt_2,$$

$$(iso\text{-}Bu)_2Al\underset{\displaystyle Et}{\underset{|}{N}}Al(iso\text{-}Bu)_2$$

and the like].

In the above formulae, Me, Et and Bu represent a methyl group, an ethyl group and a butyl group, respectively.

Of the organoaluminum compounds represented by formula (6) and those represented by formula (7), $R^7_3Al$, $R^7_nAl(OR^8)_{3-n}$ and $R^7_nAl(OAlR^{10}_2)_{3-n}$, especially, those wherein $R^7$ is an isoalkyl group and n is 2 or 3, are preferred. The above organoalminum compounds can be used individually or in any combination.

In the present invention, the atomic ratio ($Al_c/Al_{b-2}$) of aluminum ($Al_c$) in the organoaluminum compound (C) to aluminum ($Al_{b-2}$) in the organoaluminumoxy compound (b-2) is generally from 0.01 to 5, preferably from 0.02 to 3.

In the present invention, by the use of the organoaluminum compound (C) in the olefin polymerization catalyst system, a high polymerization activity can be obtained. It is presumed that this is because component (C) contributes to the alkylation of component (A). However, the exact mechanism has not yet been fully elucidated.

In the present invention, when use is made of particulate inorganic solid (b-1) prepared by contacting a particulate inorganic solid having hydroxyl groups on the surface thereof with an organoaluminum compound to modify the surface hydroxyl groups so that the hydroxyl group content of the particulate inorganic solid is adjusted to a predetermined level, the catalyst system is sometimes caused to have a high polymerization activity. It is presumed that this is because some of the organoaluminum compound remains unreacted due to nonuniformity of the reaction, and the unreacted organoaluminum compound contributes to the alkylation of the transition metal compound. However, the polymerization activity can be more effectively and stably increased when the organoaluminum compound is also employed as component (C) in the olefin polymerization catalyst system as defined in the present invention. Further, component (C) also has the ability to neutralize or negate impurities which adversely affect the polymerization. Such neutralization or negation is practically equal to elimination of the impurities. Accordingly, it is possible to exert the polymerization activity stably and fully. Furthermore, component (C) is effective for suppressing aggregation of the polymer. It is presumed that this is because component (C) serves to suppress generation of static electricity during the polymerization. However, the exact mechanism of the aggregation suppression has not yet been fully elucidated.

By using the olefin polymerization catalyst system comprising the components (A), (B) and (C) explained above, polymerization or copolymerization of an olefin can be advantageously carried out.

With respect to the method for polymerizing or copolymerizing an olefin in the presence of the catalyst system of the present invention, detailed explanation is made below.

As a method for combining the components (A), (B) and (C) to thereby cause the catalyst system to be present in a reaction system for the polymerization or copolymerization, the following methods can be mentioned:

a method which comprises separately introducing the component (A), the component (B) and the component (C) into the polymerization reaction system;

a method which comprises forming an intimate mixture of the components (B) and (C), and separately introducing the polymerization intimate mixture and the component (A) into the polymerization reaction system; and

a method which comprises forming an intimate mixture of the components (A) and (C), and separately introducing the intimate mixture and the component (B) into the polymerization reaction system.

By using the above method, a high polymerization activity of the catalyst system can be achieved and stably retained during the reaction.

In the presence of the above-mentioned olefin polymerization catalyst system, polymerization of at least one olefin selected from the group consisting of a $C_3$-$C_{20}$ $\alpha$-olefin and a $C_3$-$C_{20}$ cyclic olefin, or copolymerization of the at least one olefin with at least one compound represented by the formula $H_2C = CHR^{15}$ wherein $R^{15}$ is a $C_6$-$C_{20}$ aryl group, or with at least one $C_4$-$C_{20}$ linear, branched or cyclic diene, can be conducted.

Examples of $C_3$-$C_{20}$ $\alpha$-olefins include propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene; examples of $C_3$-$C_{20}$ cyclic olefins include cyclopentene, cycloheptene, norbornene, 5-methyl-2-norbornene, tetracyclododecene and 2-methyl-1.4,5.8-dimethano-1,2,3,4,4a,5,8,8a-octahydronaphthalene; examples of compounds represented by the formula $H_2C=CHR^{15}$, wherein $R^{15}$ is a $C_6$-$C_{20}$ aryl group, include styrene; and examples of $C_4$-$C_{20}$ linear, branched or cyclic dienes include 1,3-butadiene, 1,4-pentadiene, 1,4-hexadiene, 1,5-hexadiene and cyclohexadiene.

The catalyst system of the present invention can be advantageously used for homopolymerization of ethylene, or copolymerization of ethylene with at least one compound selected from the group consisting of a compound represented by the formula $H_2C=CHR^{16}$ wherein $R^{16}$ is a $C_1$-$C_{18}$ linear, branched or cyclic alkyl group or a $C_6$-$C_{20}$ aryl group, a $C_3$-$C_{20}$ cyclic olefin, and a $C_4$-$C_{20}$ linear, branched or cyclic diene.

In this case, examples of compounds represented by the formula $H_2C=CHR^{16}$, wherein $R^{16}$ is a $C_1$-$C_{18}$ linear branched or cyclic alkyl group or a $C_6$-$C_{20}$ aryl group, include propylene, 1-butene, 1-pentene, 1-hexene, 4-methyl-1-pentene, 1-octene, 1-decene, 1-dodecene, 1-tetradecene, 1-hexadecene, 1-octadecene, 1-eicosene, vinylcyclohexane and styrene; examples of $C_3$-$C_{20}$ cyclic olefins include cyclopentene, cycloheptene, norbornene, 5-methyl-2-norbornene, tetracyclododecene and 2-methyl-1.4,5.8-dimethano-1,2,3,4,4a,5,8,8a-octahydronaphthalene; and examples of $C_4$-$C_{20}$ linear, branched or cyclic dienes include 1,3-butadiene, 1,4-pentadiene, 1,4-hexadiene, 1,5-hexadiene and cyclohexadiene.

By copolymerizing ethylene with the above-mentioned compound, an ethylene polymer having suitably controlled density and physical properties can be obtained.

The polymerization of an olefin according to the present invention can be conducted by either of suspension polymerization and vapor phase polymerization.

In the suspension polymerization, the same solvent as the inert hydrocarbon solvent used for preparing the component (B) can be used. The olefin itself can also be used as the solvent.

In the polymerization of an olefin using the catalyst system of the present invention, it is preferred that the catalyst system be fed to the reaction system in a manner such that the amount of the component (B) becomes 1 % by weight to 0.001 % by weight, based on the total weight of the polymer obtained per hour. The polymerization temperature is generally not lower than 0 °C, preferably not lower than 50 °C, more preferably not lower than 60 °C, and generally not higher than 150 °c, preferably not higher than 110 °C, more preferably not higher than 100 °C. The polymerization pressure is generally from atmospheric pressure to 100 $kg/cm^2$, preferably from 2 to 50 $kg/cm^2$, more preferably from 5 to 30 $kg/cm^2$. The polymerization reaction can be conducted in a batchwise manner, semi-continuous manner or continuous manner. It is possible to conduct the polymerization reaction in a two-stage manner, wherein the reaction conditions in the first stage are different from the reaction conditions in the second stage.

As described in DE 3127133.2, the molecular weight of the olefin polymer obtained can be controlled by introducing hydrogen gas into the polymerization reaction system or by changing the polymerization temperature.

In the present invention, the olefin polymerization catalyst system can contain effective components other than the above-mentioned components.

## BEST MODE FOR CARRYING OUT THE INVENTION

The present invention will now be further illustrated in more detail with reference to the following Examples and Comparative Examples, which should not be construed as limiting the scope of the present invention.

In the following Examples and Comparative Examples, the properties of the ethylene polymer obtained are measured as follows.

[Content of an n-decane soluble component]

The content of an n-decane soluble component as a low molecular weight wax component of the ethylene polymer, is measured as follows. About 3 g of the ethylene polymer is added to 450 ml of n-decane, and the resultant mixture is heated at 145 °C to thereby dissolve the polymer. The resultant solution is cooled to 23 °C and filtered to remove an n-decane insoluble component. From the resultant filtrate, an n-decane soluble component is recovered by evaporation of the n-decane, and the amount thereof is measured.

[Density]

A strand which has been obtained in the measurement of MFR of the ethylene polymer at 190 °C under a load of 2.16 kg, is heated at 120 °C for 1 hour and then, gradually cooled to room temperature. The density of the cooled strand is measured by means of a density-gradient tube.

[Average particle diameter of the particulate polymer product, and content of very fine particles]

With respect to the average particle diameter of the particulate polymer product and the amount of very fine particles having a particle diameter of less than 100 μm, measurements are done using sieves.

<u>Example 1</u>

[Preparation of a suspension of a silica having methylaluminoxane carried thereon]

In a 200-ml glass flask which had been fully purged with nitrogen gas were placed 4.0 g of silica (which is manufactured and sold by Fuji Silysia Chemical Ltd., Japan, and has a pore volume of 1.10 $cm^3$/g, a specific surface area of 318 $m^2$/g, a bulk density of 0.38 g/$cm^3$ and a hydroxyl group content of 4.1 % by weight) and 40 ml of toluene, and stirring was conducted to obtain a suspension. The obtained suspension was cooled to -5 °C. To the cooled suspension was dropwise added 30 ml of a solution of methylaluminoxane in toluene (MMAO, manufactured and sold by Tosoh Akzo Corp., Japan; Al concentration: 1.15 mol/liter) over 1 hour in a nitrogen atmosphere, while maintaining the temperature of the suspension at -5 °C. The resultant mixture was maintained at 0 °C for 1 hour and then at room temperature for 1 hour, in the nitrogen atmosphere. Thereafter, the temperature of the mixture was further elevated, so that the mixture was refluxed for 3 hours, in the nitrogen atmosphere. During a series of the above operations, generation of methane gas from the mixture was observed. Then, the mixture was cooled to 20 °C, so that a suspension of a silica having methylaluminoxane carried thereon was obtained.

The aluminum concentration of the supernatant of the above-obtained silica suspension was measured. As a result, aluminum was almost not detected in the supernatant.

[Polymerization]

In a 1.6-liter stainless autoclave as a polymerizer, which had been fully purged with nitrogen gas, was placed 0.8 liter of hexane, and 80 ml of 1-hexene was added to the hexane in the autoclave. To the resultant mixture was added 0.3 mmol of triisobutylaluminum and further added the above-prepared silica suspension in an amount of 0.5 mmol in terms of aluminum of methylaluminoxane carried on the silica. Then, ethylene was introduced to the polymerizer, so that the internal pressure of the polymerizer became 7 kg/$cm^2$-G. The internal temperature of the polymerizer was adjusted to 65 °C.

A solution of bis(n-butylcyclopentadienyl)zirconium dichloride (which is known as a metallocene) in toluene, was introduced to the polymerizer in an amount of 0.5 μmol in terms of zirconium, and the internal temperature of the polymerizer was elevated to 70 °C, to thereby start a polymerization reaction of the ethylene.

The polymerization reaction was carried out at 70 °C for 1 hour, while maintaining the internal pressure of the polymerizer at 7 kg/$cm^2$-G by supplying ethylene gas to the polymerizer.

After completion of the polymerization reaction, the reaction mixture obtained in the polymerizer was transferred to a stainless container containing methanol. The resultant mixture was subjected to filtration to thereby obtain a polymer. The obtained polymer was dried at 50 °C overnight.

The polymerizer was opened and the inside thereof was examined. No polymer adhering to the inner wall of the polymerizer was observed.

As a result, 121 g of an ethylene-hexene copolymer having the following properties was obtained: an MFR of 1.86 g/10 minutes as measured at 190 °C under a load of 2.16 kg; a density of 0.911 g/cm$^3$; an n-decane soluble component content of less than 0.1 % by weight as measured at 23 °C; a bulk density of 0.37 g/cm$^3$; an average particle diameter of 700 μm; and a content of very fine polymer particles (having a particle diameter of less than 100 μm) of less than 0.1 % by weight.

Example 2

[Preparation of a suspension of a silica having methylaluminoxane carried thereon]

In the same manner as in Example 1, a suspension of a silica having methylaluminoxane carried thereon was prepared.

[Polymerization]

A polymerization reaction was conducted using the above-prepared silica suspension in substantially the same manner as in Example 1, except that 1-hexene was not used.

After completion of the polymerization reaction, the polymerizer was opened and the inside thereof was examined. No polymer adhering to the inner wall of the polymerizer was observed.

As a result of the polymerization reaction, 181 g of an ethylene polymer having the following properties was obtained: an MFR of 0.12 g/10 minutes as measured at 190 °C under a load of 2.16 kg; a density of 0.952 g/cm$^3$; an n-decane soluble component content of less than 0.1 % by weight as measured at 23 °C; a bulk density of 0.36 g/cm$^3$; an average particle diameter of 720 μm; and a content of very fine polymer particles (having a particle diameter of less than 100 μm) of less than 0.1 % by weight.

Example 3

[Preparation of a suspension of a silica having methyl-aluminoxane carried thereon]

In a 200-ml glass flask which had been fully purged with nitrogen gas were placed 4.0 g of silica (which is manufactured and sold by Fuji Silysia Chemical Ltd., Japan, and has a pore volume of 0.80 cm$^3$/g, a specific surface area of 498 m$^2$/g, a bulk density of 0.51 g/cm$^3$ and a hydroxyl group content of 5.7 % by weight) having been dried at 70 °C for 3 hours in a nitrogen atmosphere and 40 ml of toluene, and stirring was conducted to obtain a suspension. The obtained suspension was cooled to -5 °C. On the other hand, 10 ml of a solution of trimethylaluminum in toluene (Al concentration: 1.15 mol/liter) was mixed with 30 ml of a solution of methylaluminoxane in toluene (MMAO, manufactured and sold by Tosoh Akzo Corp., Japan; Al concentration: 1.15 mol/liter) to thereby obtain 40 ml of a mixture of trimethylaluminum and methylaluminoxane. 30 ml of the obtained mixture was dropwise added to the cooled suspension obtained above over 1 hour in a nitrogen atmosphere, while maintaining the temperature of the suspension at -5 °C. The resultant mixture was maintained at 0 °C for 1 hour and then at room temperature for 1 hour, in the nitrogen atmosphere. Thereafter, the temperature of the mixture was further elevated, so that the mixture was refluxed for 3 hours, in the nitrogen atmosphere. During a series of the above operations, generation of methane gas from the mixture was observed. Then, the mixture was cooled to 20 °C, so that a suspension of a silica having methylaluminoxane carried thereon was obtained.

[Polymerization]

A polymerization reaction was conducted using the above-prepared silica suspension in substantially the same manner as in Example 1, except that the silica suspension was used in an amount of 0.33 mmol in terms of aluminum of methylaluminoxane carried on the silica and a solution of bis(n-butylcyclopentadienyl)zirconium dichloride in toluene was used in an amount of 0.33 μmol in terms of zirconium.

After completion of the polymerization reaction, the polymerizer was opened and the inside thereof was examined. No polymer adhering to the inner wall of the polymerizer was observed.

As a result of the polymerization reaction, 97 g of an ethylene-hexene copolymer having the following properties was obtained: an MFR of 1.89 g/10 minutes as measured at 190 °C under a load of 2.16 kg; a density of 0.910g/cm$^3$; an n-decane soluble component content of less than 0.1 % by weight as measured at 23 °C; a bulk density of 0.38 g/cm$^3$; an average particle diameter of 670 μm; and a content of very fine polymer particles (having a particle diameter of less than 100 μm) of less than 0.1 % by weight.

Example 4

[Preparation of a suspension of a silica having methylaluminoxane carried thereon]

In the same manner as in Example 3, a suspension of a silica having methylaluminoxane carried thereon was prepared.

[Polymerization]

A polymerization reaction was conducted using the above-prepared silica suspension in substantially the same manner as in Example 1, except that the silica suspension was used in an amount of 0.33 mmol in terms of aluminum of methylaluminoxane carried on the silica, and 1-hexene was not used.

After completion of the polymerization reaction, the polymerizer was opened and the inside thereof was examined. No polymer adhering to the inner wall of the polymerizer was observed.

As a result of the polymerization reaction, 130 g of an ethylene polymer having the following properties was obtained: an MFR of 0.11 g/10 minutes as measured at 190 °C under a load of 2.16 kg; a density of 0.950 g/$cm^3$; an n-decane soluble component content of less than 0.1 % by weight as measured at 23 °C; a bulk density of 0.39 g/$cm^3$; an average particle diameter of 690 μm; and a content of very fine polymer particles (having a particle diameter of less than 100 μm) of less than 0.1 % by weight.

Example 5

[Preparation of a suspension of a silica having methylaluminoxane carried thereon]

In a 200-ml glass flask which had been fully purged with nitrogen gas were placed 3.0 g of silica (which is manufactured and sold by Fuji Silysia Chemical Ltd., Japan, and has a pore volume of 0.97 $cm^3$/g, a specific surface area of 360 $m^2$/g, a bulk density of 0.45 g/$cm^3$ and a hydroxyl group content of 5.8 % by weight) and 30 ml of toluene, and stirring was conducted to obtain a suspension. The obtained suspension was cooled to 20 °C. To the cooled suspension was dropwise added 2 ml of a solution of triisobutylaluminum in toluene (Al concentration: 1.00 mol/liter) over 1 hour in a nitrogen atmosphere with stirring, while maintaining the temperature of the suspension at 20 °C. The resultant mixture was further stirred at 20 °C for 1 hour. To the resultant mixture was dropwise added 30 ml of a solution of methylaluminoxane in toluene (MMAO-3A, manufactured and sold by Tosoh Akzo corp., Japan; Al concentration: 1.15 mol/liter) over 30 minutes in the nitrogen atmosphere with stirring, while maintaining the temperature of the mixture at 20 °C. The resultant mixture was maintained at 0 °C for 1 hour and then at room temperature for 1 hour, in the nitrogen atmosphere. Thereafter, the temperature of the mixture was further elevated, so that the mixture was refluxed for 3 hours, in the nitrogen atmosphere. During a series of the above operations, generation of methane gas from the mixture was observed. Then, the mixture was cooled to 20 °C, so that a suspension of a silica having methylaluminoxane carried thereon was obtained.

[Polymerization]

A polymerization reaction was conducted using the above-prepared silica suspension in substantially the same manner as in Example 1, except that the silica suspension prepared above was used in an amount of 0.5 mmol in terms of aluminum of methylaluminoxane carried on the silica.

After completion of the polymerization reaction, the polymerizer was opened and the inside thereof was examined. No polymer adhering to the inner wall of the polymerizer was observed.

As a result of the polymerization reaction, 132 g of an ethylene-hexene copolymer having the following properties was obtained: an MFR of 1.80 g/10 minutes as measured at 190 °C under a load of 2.16 kg; a density of 0.913 g/$cm^3$; an n-decane soluble component content of less than 0.1 % by weight as measured at 23 °C; a bulk density of 0.38 g/$cm^3$; an average particle diameter of 650 μm; and a content of very fine polymer particles (having a particle diameter of less than 100 μm) of less than 0.1 % by weight.

Examples 6 to 15

Polymerization reactions were individually conducted in substantially the same manner as in Example 1, except that the type of a silica, the type and amount of a methallocene, the type of a comonomer and the polymerization reaction conditions were changed as shown in Table 1.

Results are shown in Table 2.

Example 16

[Preparation of a suspension of a silica having methylaluminoxane carried thereon]

In the same manner as in Example 1, a suspension of a silica having methylaluminoxane carried thereon was prepared.

[Polymerization]

In a 1.6-liter stainless autoclave as a polymerizer, which had been fully purged with nitrogen gas, was placed 0.8 liter of hexane, and 80 ml of 1-hexene was added to the hexane in the autoclave. To the resultant mixture was added 0.3 mmol of triisobutylaluminum and further added the above-prepared silica suspension in an amount of 0.5 mmol in terms of aluminum of methylaluminoxane carried on the silica. Then, ethylene was introduced to the polymerizer, so that the internal pressure of the polymerizer became 7 $kg/cm^2$-G. The internal temperature of the polymerizer was adjusted to 65 °C.

A solution of bis(n-butylcyclopentadienyl)zirconium dichloride in toluene, and a solution of bis(1,3-dimethylcyclopentadienyl)zirconium dichloride in toluene, were introduced to the polymerizer each in an amount of 0.25 μmol in terms of zirconium, and the internal temperature of the polymerizer was elevated to 70 °C, to thereby start a polymerization reaction of the ethylene.

The polymerization reaction was carried out at 70 °C for 1 hour, while maintaining the internal pressure of the polymerizer at 7 $kg/cm^2$-G by supplying ethylene gas to the polymerizer.

After completion of the polymerization reaction, the reaction mixture obtained in the polymerizer was subjected to filtration to thereby obtain a polymer. The obtained polymer was washed with methanol, and dried at 50 °C overnight.

The polymerizer was opened and the inside thereof was examined. No polymer adhering to the inner wall of the polymerizer was observed.

As a result, 108 g of an ethylene-hexene copolymer having the following properties was obtained: an MFR of 0.95 g/10 minutes as measured at 190 °C under a load of 2.16 kg; a density of 0.919 $g/cm^3$; an n-decane soluble component content of less than 0.1 % by weight as measured at 23 °C; a bulk density of 0.35 $g/cm^3$; a melt tension of 6.5 g; an average particle diameter of 700 μm; and a content of very fine polymer particles (having a particle diameter of less than 100 μm) of less than 0.1 % by weight.

Example 17

[Preparation of a suspension of a silica having methylaluminoxane carried thereon]

In the same manner as in Example 1, a suspension of a silica having methylaluminoxane carried thereon was prepared.

[Polymerization]

A polymerization reaction was conducted using the above-prepared silica suspension in substantially the same manner as in Example 16, except that 1-hexene was not used.

After completion of the polymerization reaction, the polymerizer was opened and the inside thereof was examined. No polymer adhering to the inner wall of the polymerizer was observed.

As a result of the polymerization reaction, 160 g of an ethylene polymer having the following properties was obtained: an MFR of 0.11 g/10 minutes as measured at 190 °C under a load of 2.16 kg; a density of 0.943 $g/cm^3$; an n-decane soluble component content of less than 0.1 % by weight as measured at 23 °C; a bulk density of 0.37 $g/cm^3$; a melt tension of 28.5 g; an average particle diameter of 680 μm; and a content of very fine polymer particles (having a particle diameter of less than 100 μm) of less than 0.1 % by weight.

Example 18

[Preparation of a suspension of a silica having methylaluminoxane carried thereon]

In a 200-ml glass flask which had been fully purged with nitrogen gas were placed 4.0 g of silica (which is manufactured and sold by Fuji Silysia Chemical Ltd., Japan, and has a pore volume of 1.10 $cm^3/g$, a specific surface area of 318 $m^2/g$, a bulk density of 0.38 $g/cm^3$ and a hydroxyl group content of 4.1 % by weight) and 40 ml of toluene, and stirring was conducted to obtain a suspension. The obtained suspension was cooled to -5 °C. To the cooled suspension was dropwise added 60 ml of a solution of methylaluminoxane (manufactured and sold by Albemarle Corporation,

U.S.A.) in toluene (Al concentration: 1.00 mol/liter) over 1 hour in a nitrogen atmosphere with stirring, while maintaining the temperature of the suspension at -5 °C. The resultant mixture was maintained at 0 °C for 1 hour and then at room temperature for 1 hour, in the nitrogen atmosphere. Thereafter, the temperature of the mixture was further elevated, so that the mixture was refluxed for 3 hours, in the nitrogen atmosphere. During a series of the above operations, generation of methane gas from the mixture was observed. Then, the mixture was cooled to 20 °C, so that a suspension of a silica having methylaluminoxane carried thereon was obtained.

[Polymerization]

A polymerization reaction was conducted using the above-prepared silica suspension in substantially the same manner as in Example 16, except that the silica suspension was used in an amount of 1 mmol in terms of aluminum of methylaluminoxane carried on the silica, and that the solution of bis(n-butylcyclopentadienyl)zirconium dichloride in toluene was used in an amount of 0.4 μmol in terms of zirconium, and the solution of bis(1,3-dimethylcyclopentadienyl)zirconium dichloride in toluene was used in an amount of 0.1 μmol in terms of zirconium.

After completion of the polymerization reaction, the polymerizer was opened and the inside thereof was examined. No polymer adhering to the inner wall of the polymerizer was observed.

As a result of the polymerization reaction, 120 g of an ethylene-hexene copolymer having the following properties was obtained: an MFR of 1.79 g/10 minutes as measured at 190 °C under a load of 2.16 kg; a density of 0.921 g/cm$^3$; an n-decane soluble component content of less than 0.1 % by weight as measured at 23 °C; a bulk density of 0.35 g/cm$^3$; a melt tension of 2.1 g; an average particle diameter of 680 μm; and a content of very fine polymer particles (having a particle diameter of less than 100 μm) of less than 0.1 % by weight.

Example 19

[Preparation of a suspension of a silica having methylaluminoxane carried thereon]

In the same manner as in Example 3, a suspension of a silica having methylaluminoxane carried thereon was prepared.

[Polymerization]

A polymerization reaction was conducted using the above-prepared silica suspension in substantially the same manner as in Example 16, except that the silica suspension was used in an amount of 0.33 mmol in terms of aluminum of methylaluminoxane carried on the silica, and that the solution of bis(n-butylcyclopentadienyl)zirconium dichloride in toluene was used in an amount of 0.22 μmol in terms of zirconium, and the solution of bis(1,3-dimethylcyclopentadienyl)zirconium dichloride in toluene was used in an amount of 0.11 μmol in terms of zirconium.

After completion of the polymerization reaction, the polymerizer was opened and the inside thereof was examined. No polymer adhering to the inner wall of the polymerizer was observed.

As a result of the polymerization reaction, 96 g of an ethylene-hexene copolymer having the following properties was obtained: an MFR of 1.59 g/10 minutes as measured at 190 °C under a load of 2.16 kg; a density of 0.920 g/cm$^3$; an n-decane soluble component content of less than 0.1 % by weight as measured at 23 °C; a bulk density of 0.39 g/cm$^3$; a melt tension of 3.9 g; an average particle diameter of 710 μm; and a content of very fine polymer particles (having a particle diameter of less than 100 μm) of less than 0.1 % by weight.

Example 20

[Preparation of a suspension of a silica having methylaluminoxane carried thereon]

In the same manner as in Example 5, a suspension of a silica having methylaluminoxane carried thereon was prepared.

[Polymerization]

A polymerization reaction was conducted in substantially the same manner as in Example 16, except that the above-prepared silica suspension was used.

After completion of the polymerization reaction, the polymerizer was opened and the inside thereof was examined. No polymer adhering to the inner wall of the polymerizer was observed.

As a result of the polymerization reaction, 116 g of an ethylene-hexene copolymer having the following properties was obtained: an MFR of 1.01 g/10 minutes as measured at 190 °C under a load of 2.16 kg; a density of 0.917 g/cm$^3$;

an n-decane soluble component content of less than 0.1 % by weight as measured at 23 °C; a bulk density of 0.37 g/$cm^3$; a melt tension of 6.2 g; an average particle diameter of 650 μm; and a content of very fine polymer particles (having a particle diameter of less than 100 μm) of less than 0.1 % by weight.

Examples 21 to 25

Polymerization reactions were individually conducted in substantially the same manner as in Example 16, except that types of a silica, a methallocene and compound (C) were changed as shown in Table 3.

Results are shown in Table 4.

Comparative Example 1

[Preparation of a suspension of a silica having methylaluminoxane carried thereon]

A suspension of a silica having methylaluminoxane carried thereon was prepared in substantially the same manner as in Example 1, except that silica having a pore volume of 2.29 $cm^3$/g, a specific surface area of 359 $m^2$/g, a bulk density of 0.25 g/$cm^3$ and a hydroxyl group content of 2.8 % by weight was used.

[Polymerization]

A polymerization reaction was conducted in substantially the same manner as in Example 1, except that the above-prepared silica suspension was used, and triisobutylaluminum was not used.

After completion of the polymerization reaction, the polymerizer was opened and the inside thereof was examined. No polymer adhering to the inner wall of the polymerizer was observed.

As a result of the polymerization reaction, only 6 g of an ethylene polymer having the following properties was obtained: an MFR of 2.09 g/10 minutes as measured at 190 °C under a load of 2.16 kg; a density of 0.915 g/$cm^3$; an n-decane soluble component content of less than 0.1 % by weight as measured at 23 °C; a bulk density of 0.18 g/$cm^3$; an average particle diameter of 310 μm; and a content of very fine polymer particles (having a particle diameter of less than 100 μm) of 3.8 % by weight.

Comparative Example 2

[Preparation of a suspension of a silica having methylaluminoxane carried thereon]

In a 200-ml glass flask which had been fully purged with nitrogen gas were placed 4.0 g of silica (which is manufactured and sold by Fuji Silysia Chemical Ltd., Japan, and has a pore volume of 1.10 $cm^3$/g, a specific surface area of 318 $m^2$/g, a bulk density of 0.38 g/$cm^3$ and a hydroxyl group content of 4.1 % by weight), which had been dried at 70 °C for 3 hours in a nitrogen atmosphere, and 40 ml of toluene, and stirring was conducted to obtain a suspension. The obtained suspension was cooled to -5 °C. On the other hand, 10 ml of a solution of trimethylaluminum in toluene (Al concentration: 1.15 mol/liter) and 30 ml of a solution of methylaluminoxane in toluene (PMAO, manufactured and sold by Tosoh Akzo Corp., Japan; Al concentration: 1.15 mol/liter) were mixed. The resultant mixture was stirred at 40 °C for 5 hours in a nitrogen atmosphere to thereby effect a reaction. Thus, 40 ml of a reaction mixture of trimethylaluminum and methylaluminoxane was obtained. 30 ml of the obtained reaction mixture was dropwise added to the cooled suspension obtained above over 1 hour in a nitrogen atmosphere, while maintaining the temperature of the suspension at -5 °C. The resultant mixture was maintained at 0 °C for 1 hour and then at room temperature for 1 hour, in the nitrogen atmosphere. Thereafter, the temperature of the mixture was further elevated, so that the mixture was refluxed for 3 hours, in the nitrogen atmosphere. Then, the mixture was cooled to 20 °C, so that a suspension of a silica having methylaluminoxane carried thereon was obtained.

[Polymerization]

A polymerization reaction was conducted in substantially the same manner as in Example 1, except that the above-obtained silica suspension was used and compound (C) was not used.

After completion of the polymerization reaction, the polymerizer was opened and the inside thereof was examined. No polymer adhering to the inner wall of the polymerizer was observed.

As a result of the polymerization reaction, only 8 g of an ethylene polymer having the following properties was obtained: an MFR of 2.05 g/10 minutes as measured at 190 °C under a load of 2.16 kg; a density of 0.917 g/$cm^3$; an n-decane soluble component content of less than 0.1 % by weight as measured at 23 °C; a bulk density of 0.30 g/$cm^3$;

an average particle diameter of 330 μm; and a content of very fine polymer particles (having a particle diameter of less than 100 μm) of 3.7 % by weight.

Comparative Example 3

[Preparation of a suspension of a silica having methylaluminoxane carried thereon]

In a 200-ml glass flask which had been fully purged with nitrogen gas were placed 4.0 g of silica (which has a pore volume of 0.98 $cm^3$/g, a specific surface area of 280 $m^2$/g, a bulk density of 0.40 g/$cm^3$ and a hydroxyl group content of 0.1 % by weight) and water in an amount equivalent to 5 % of the silica by weight, and the mixture was subjected to dry blending. To the resultant mixture was added 40 ml of toluene, and stirring was conducted to obtain a suspension. The obtained suspension was cooled to -5 °C. To the cooled suspension was dropwise added 30 ml of a solution of methylaluminoxane in toluene (MMAO, manufactured and sold by Tosoh Akzo Corp., Japan; Al concentration: 1.15 mol/liter) over 1 hour in a nitrogen atmosphere, while maintaining the temperature of the suspension at -5 °C. The resultant mixture was maintained at 0 °C for 1 hour and then at room temperature for 1 hour, in the nitrogen atmosphere. Thereafter, the temperature of the mixture was further elevated, so that the mixture was refluxed for 3 hours, in the nitrogen atmosphere. Then, the mixture was cooled to 20 °C, so that a suspension of a silica having methylaluminoxane carried thereon was obtained.

[Polymerization]

A polymerization reaction was conducted in substantially the same manner as in Example 1, except that the above-obtained silica suspension was used.

After completion of the polymerization reaction, the polymerizer was opened and the inside thereof was examined. An indefinite-polymer adhering to the inner wall and the stirring blades of the polymerizer was observed.

As a result of the polymerization reaction, 35 g of an ethylene-hexene copolymer having the following properties was obtained: an MFR of 2.57 g/10 minutes as measured at 190 °C under a load of 2.16 kg; a density of 0.923 g/$cm^3$; an n-decane soluble component content of less than 0.1 % by weight as measured at 23 °C; a bulk density of 0.21 g/$cm^3$; an average particle diameter of 420 μm; and a content of very fine polymer particles (having a particle diameter of less than 100 μm) of 1.5 % by weight.

Comparative Example 4

[Preparation of a suspension of a silica having methylaluminoxane carried thereon]

In a 200-ml glass flask which had been fully purged with nitrogen gas were placed 4.0 g of silica (which is manufactured and sold by Fuji Silysia Chemical Ltd., Japan, and has a pore volume of 1.10 $cm^3$/g, a specific surface area of 318 $m^2$/g, a bulk density of 0.38 g/$cm^3$ and a hydroxyl group content of 4.1 % by weight) and 40 ml of toluene, and stirring was conducted to obtain a suspension. The obtained suspension was cooled to -5 °C. To the cooled suspension was dropwise added 30 ml of a solution of methylaluminoxane in toluene (MMAO, manufactured and sold by Tosoh Akzo Corp., Japan; Al concentration: 1.15 mol/liter) over 1 hour, while maintaining the temperature of the suspension at -5 °C. The resultant mixture was maintained at 0 °C for 1 hour and then at room temperature for 1 hour. Thereafter, the temperature of the mixture was further elevated, so that the mixture was refluxed for 3 hours, followed by cooling to 20 °C. To the resultant suspension, a solution of bis(n-butylcyclopentadienyl)zirconium dichloride in toluene was gradually added in an amount of 34.5 μmol in terms of zirconium over 3 hours with stirring. The suspension was further stirred for 24 hours, so that a suspension of a silica having methylaluminoxane and bis(n-butylcyclopentadienyl)zirconium dichloride carried thereon was obtained.

[Polymerization]

In a 1.6-liter stainless autoclave as a polymerizer, which had been fully purged with nitrogen gas, was placed 0.8 liter of hexane, and 80 ml of 1-hexene was added to the hexane in the polymerizer. To the resultant mixture was added 0.3 mmol of triisobutylaluminum and further added the above-prepared silica suspension in an amount of 0.5 mmol in terms of aluminum. Then, ethylene was introduced to the polymerizer, so that the internal pressure of the polymerizer became 7 kg/$cm^2$-G. The internal temperature of the polymerizer was adjusted to 70 °C, to thereby initiate a polymerization reaction.

Subsequent operations for the polymerization reaction were the same as described in Example 1. Thus, a polymer was obtained.

After completion of the polymerization reaction, the polymerizer was opened and the inside thereof was examined. A small amount of an indefinite-polymer adhering to the inner wall and the stirring blades of the polymerizer was observed.

As a result of the polymerization reaction, 7 g of an ethylene-hexene copolymer having the following properties was obtained: an MFR of 2.01 g/10 minutes as measured at 190 °C under a load of 2.16 kg; a density of 0.914 $g/cm^3$; an n-decane soluble component content of less than 0.1 % by weight as measured at 23 °C; a bulk density of 0.31 $g/cm^3$; an average particle diameter of 320 μm; and a content of very fine polymer particles (having a particle diameter of less than 100 μm) of 3.9 % by weight.

Comparative Example 5

[Preparation of a suspension of a silica having methylaluminoxane carried thereon]

A suspension of a silica having methylaluminoxane and bis(n-butylcyclopentadienyl)zirconium dichloride carried thereon was prepared in the same manner as in Comparative Example 4.

[Polymerization]

A polymerization reaction was conducted in substantially the same manner as in Comparative Example 4, except that triisobutylaluminum was not used.

As a result, a polymer was obtained in an amount as small as not more than 1 g, which was insufficient to analyze the properties of the polymer.

Comparative Example 6

[Preparation of a suspension of a silica having methylaluminoxane carried thereon]

In a 200-ml glass flask which had been fully purged with nitrogen gas were placed 4.0 g of silica (which has a pore volume of 0.98 $cm^3/g$, a specific surface area of 280 $m^2/g$, a bulk density of 0.40 $g/cm^3$ and a hydroxyl group content of 0.1 % by weight) and water in an amount equivalent to 5 % of the silica by weight, and the mixture was subjected to dry blending. To the resultant mixture was added 40 ml of toluene, and stirring was conducted to obtain a suspension. The obtained suspension was cooled to -5 °C. To the cooled suspension was added a solution of trimethylaluminum in toluene in an amount of 30 mmol in terms of aluminum over 1 hour with stirring, while the temperature of the suspension was maintained at -5 °C. The resultant mixture was further stirred for 24 hours to thereby effect a reaction. Then, the stirred mixture was allowed to stand still for 3 days, to thereby obtain a suspension of a silica.

[Polymerization]

A polymerization reaction was conducted in substantially the same manner as in Example 1, except that the above-obtained silica suspension was used.

After completion of the polymerization reaction, the polymerizer was opened and the inside thereof was examined. An indefinite-polymer adhering to the inner wall and the stirring blades of the polymerizer was observed.

As a result of the polymerization reaction, 18 g of an ethylene-hexene copolymer having the following properties was obtained: an MFR of 2.73 g/10 minutes as measured at 190 °C under a load of 2.16 kg; a density of 0.925 $g/cm^3$; an n-decane soluble component content of less than 0.1 % by weight as measured at 23 °C; a bulk density of 0.20 $g/cm^3$; an average particle diameter of 350 μm; and a content of very fine polymer particles (having a particle diameter of less than 100 μm) of 3.0 % by weight.

Tables 1, 3 and 5 show the materials and the polymerization reaction conditions employed in the above Examples and Comparative Examples.

The abbreviations used in the Tables are as follows:

$(nBuCp)_2ZrCl_2$: bis(n-butylcyclopentadienyl)zirconium dichloride
$[(CH_3)_2Cp]_2ZrCl_2$: bis(1,3-dimethylcyclopentadienyl)zirconium dichloride
$Et(Ind)_2ZrCl_2$: ethylenebis(indenyl)zirconium dichloride
$Me_2Si(Ind)_2ZrCl_2$: dimethylsilylenebis(indenyl)zirconium dichloride
$Cp_2ZrCl_2$: bis(cyclopentadienyl)zirconium dichloride
CGC: (tert-butylamido)dimethyl(tetramethyl-$\eta^5$-cyclopentadienyl)silanetitanium dichloride
MAO: methylaluminoxane
TIBA: triisobutylaluminum

TEA: triethylaluminum.

Tables 2, 4 and 6 show the results of the polymerization reactions conducted in the above Examples and Comparative Examples.

Table 1 (To be continued)

| | Component [A] | | Component [B] | | | | | Component [C] | | Polymerization reaction conditions | | | |
|---|---|---|---|---|---|---|---|---|---|---|---|---|---|
| | | | Component (b − 1) | | | | Component (b − 2) | | | | | | |
| | | | Silica | | | | | | | | | | |
| | | | Pore volume | Specific surface area | Bulk density | Hydroxyl group content | MAO | | | Comonomer | | Temp. | Time |
| | Type | μ mol | $cm^3/g$ | $m^2/g$ | $g/cm^3$ | wt% | mmol | Type | mmol | Type | ml | ℃ | hr |
| Example 1 | $(nBuCp)_2ZrCl_2$ | 0.50 | 1.10 | 318 | 0.38 | 4.1 | 0.50 | TIBA | 0.3 | 1-hexene | 80 | 70 | 1 |
| Example 2 | $(nBuCp)_2ZrCl_2$ | 0.50 | 1.10 | 318 | 0.38 | 4.1 | 0.50 | TIBA | 0.3 | None | 0 | 70 | 1 |
| Example 3 | $(nBuCp)_2ZrCl_2$ | 0.33 | 0.80 | 498 | 0.51 | 5.7 | 0.33 | TIBA | 0.3 | 1-hexene | 80 | 70 | 1 |
| Example 4 | $(nBuCp)_2ZrCl_2$ | 0.33 | 0.80 | 498 | 0.51 | 5.7 | 0.33 | TIBA | 0.3 | None | 0 | 70 | 1 |
| Example 5 | $(nBuCp)_2ZrCl_2$ | 0.50 | 0.97 | 360 | 0.45 | 5.8 | 0.50 | TIBA | 0.3 | 1-hexene | 80 | 70 | 1 |
| Example 6 | $(nBuCp)_2ZrCl_2$ | 0.50 | 0.65 | 250 | 0.59 | 4.5 | 0.50 | TIBA | 0.3 | 1-hexene | 80 | 70 | 1 |
| Example 7 | $(nBuCp)_2ZrCl_2$ | 0.50 | 0.60 | 640 | 0.61 | 4.1 | 0.50 | TIBA | 0.3 | 1-octene | 80 | 70 | 1 |
| Example 8 | $[(CH_3)_2Cp]_2ZrCl_2$ | 0.50 | 1.10 | 318 | 0.38 | 4.1 | 0.50 | TIBA | 0.3 | 1-hexene | 80 | 70 | 1 |

Table 1 (continued)

| | Component [A] | | Component [B] | | | | | Component [C] | | Polymerization reaction conditions | | | |
|---|---|---|---|---|---|---|---|---|---|---|---|---|---|
| | | | Component (b−1) | | | | Component (b−2) | | | | | | |
| | | | Silica | | | | | | | | | | |
| | | | Pore volume | Specific surface area | Bulk density | Hydroxyl group content | MAO | | | Comonomer | | Temp. | Time |
| | Type | μmol | $cm^3/g$ | $m^2/g$ | $g/cm^3$ | wt% | mmol | Type | mmol | Type | ml | ℃ | hr |
| Example 9 | $Et(Ind)_2ZrCl_2$ | 1.00 | 1.10 | 318 | 0.38 | 4.1 | 0.50 | TIBA | 0.3 | 1-hexene | 80 | 70 | 1 |
| Example 10 | $Me_2Si(Ind)_2ZrCl_2$ | 0.50 | 1.10 | 318 | 0.38 | 4.1 | 0.50 | TIBA | 0.3 | 1-hexene | 80 | 70 | 1 |
| Example 11 | $Cp_2ZrCl_2$ | 0.50 | 1.10 | 318 | 0.38 | 4.1 | 0.50 | TIBA | 0.3 | 1-hexene | 80 | 70 | 1 |
| Example 12 | $(nBuCp)_2ZrCl_2$ | 0.50 | 0.65 | 250 | 0.59 | 4.5 | 0.50 | TEA | 0.3 | 1-hexene | 80 | 70 | 1 |
| Example 13 | CGC | 0.50 | 1.10 | 318 | 0.38 | 4.1 | 0.50 | TIBA | 0.3 | 1-hexene | 80 | 90 | 1 |
| Example 14 | $(nBuCp)_2ZrCl_2$ | 0.50 | 1.72 | 296 | 0.31 | 4.5 | 0.50 | TIBA | 0.3 | 1-hexene | 80 | 70 | 1 |
| Example 15 | $(nBuCp)_2ZrCl_2$ | 0.50 | 2.29 | 359 | 0.25 | 2.8 | 0.50 | TIBA | 0.3 | 1-hexene | 80 | 70 | 1 |

Table 2

| | Amount of polymer obtained | Properties of polymer obtained | | | | | |
|---|---|---|---|---|---|---|---|
| | | MFR | Density | Decane-soluble component content | Bulk density | Average particle diameter | Content of very fine polymer particles (particle diameter: < 100 μm) |
| | g | g/10min. | $g/cm^3$ | wt% | $g/cm^3$ | μm | wt% |
| Example 1 | 121 | 1.86 | 0.911 | <0.1 | 0.37 | 700 | <0.1 |
| Example 2 | 181 | 0.12 | 0.952 | <0.1 | 0.36 | 720 | <0.1 |
| Example 3 | 97 | 1.89 | 0.910 | <0.1 | 0.38 | 670 | <0.1 |
| Example 4 | 130 | 0.11 | 0.950 | <0.1 | 0.39 | 690 | <0.1 |
| Example 5 | 132 | 1.80 | 0.913 | <0.1 | 0.38 | 650 | <0.1 |
| Example 6 | 96 | 2.03 | 0.910 | <0.1 | 0.38 | 680 | <0.1 |
| Example 7 | 102 | 1.85 | 0.911 | <0.1 | 0.39 | 680 | <0.1 |
| Example 8 | 116 | 0.11 | 0.932 | <0.1 | 0.38 | 730 | <0.1 |
| Example 9 | 144 | 16.20 | 0.893 | <0.1 | 0.39 | 700 | <0.1 |
| Example 10 | 142 | 3.10 | 0.898 | <0.1 | 0.36 | 690 | <0.1 |
| Example 11 | 25 | 1.79 | 0.925 | <0.1 | 0.37 | 710 | <0.1 |
| Example 12 | 90 | 1.97 | 0.912 | <0.1 | 0.37 | 670 | <0.1 |
| Example 13 | 46 | 0.01 | 0.883 | <0.1 | 0.38 | 680 | <0.1 |
| Example 14 | 102 | 1.92 | 0.912 | <0.1 | 0.29 | 450 | 1.3 |
| Example 15 | 91 | 1.76 | 0.914 | <0.1 | 0.19 | 330 | 3.8 |

Table 3 (To be continued)

| | Component [A] | | | | Component [B] | | | | | Component [C] | |
|---|---|---|---|---|---|---|---|---|---|---|---|
| | (1) | | (2) | | Component (b−1) Silica | | | | Component (b-2) MAO | | |
| | | | | | Pore volume | Specific surface area | Bulk density | Hydroxyl group content | | | |
| | Type | μmol | Type | μmol | cm³/g | m²/g | g/cm³ | wt% | mmol | Type | mmol |
| Example 16 | $(nBuCp)_2ZrCl_2$ | 0.25 | $[(CH_3)_2Cp]_2ZrCl_2$ | 0.25 | 1.10 | 318 | 0.38 | 4.1 | 0.50 | TIBA | 0.3 |
| Example 17 | $(nBuCp)_2ZrCl_2$ | 0.25 | $[(CH_3)_2Cp]_2ZrCl_2$ | 0.25 | 1.10 | 318 | 0.38 | 4.1 | 0.50 | TIBA | 0.3 |
| Example 18 | $(nBuCp)_2ZrCl_2$ | 0.40 | $[(CH_3)_2Cp]_2ZrCl_2$ | 0.10 | 1.10 | 318 | 0.38 | 4.1 | 1.00 | TIBA | 0.3 |
| Example 19 | $(nBuCp)_2ZrCl_2$ | 0.22 | $[(CH_3)_2Cp]_2ZrCl_2$ | 0.11 | 0.80 | 498 | 0.51 | 5.7 | 0.33 | TIBA | 0.3 |
| Example 20 | $(nBuCp)_2ZrCl_2$ | 0.25 | $[(CH_3)_2Cp]_2ZrCl_2$ | 0.25 | 0.97 | 360 | 0.45 | 7.0 | 0.50 | TIBA | 0.3 |
| Example 21 | $(nBuCp)_2ZrCl_2$ | 0.25 | $[(CH_3)_2Cp]_2ZrCl_2$ | 0.25 | 0.65 | 250 | 0.59 | 4.5 | 0.50 | TIBA | 0.3 |
| Example 22 | $(nBuCp)_2ZrCl_2$ | 0.25 | $[(CH_3)_2Cp]_2ZrCl_2$ | 0.25 | 0.60 | 640 | 0.61 | 4.1 | 0.50 | TIBA | 0.3 |
| Example 23 | $(nBuCp)_2ZrCl_2$ | 0.25 | CGC | 0.25 | 0.60 | 640 | 0.61 | 4.1 | 0.50 | TIBA | 0.3 |
| Example 24 | $(nBuCp)_2ZrCl_2$ | 0.25 | $[(CH_3)_2Cp]_2ZrCl_2$ | 0.25 | 0.60 | 640 | 0.61 | 4.1 | 0.50 | TEA | 0.3 |
| Example 25 | $(nBuCp)_2ZrCl_2$ | 0.25 | $[(CH_3)_2Cp]_2ZrCl_2$ | 0.25 | 1.72 | 296 | 0.31 | 4.5 | 0.50 | TIBA | 0.3 |

Table 3 (continued)

| | Polymerization reaction conditions | | | |
|---|---|---|---|---|
| | Comonomer | | Temp. | Time |
| | Type | ml | °C | hr |
| Example 16 | 1-hexene | 80 | 70 | 1 |
| Example 17 | None | 0 | 70 | 1 |
| Example 18 | 1-hexene | 80 | 70 | 1 |
| Example 19 | 1-hexene | 80 | 70 | 1 |
| Example 20 | 1-hexene | 80 | 70 | 1 |
| Example 21 | 1-hexene | 80 | 70 | 1 |
| Example 22 | 1-hexene | 80 | 70 | 1 |
| Example 23 | 1-hexene | 80 | 70 | 1 |
| Example 24 | 1-hexene | 80 | 70 | 1 |
| Example 25 | 1-hexene | 80 | 70 | 1 |

Table 4

| | Amount of polymer obtained | Properties of polymer obtained | | | | | | |
|---|---|---|---|---|---|---|---|---|
| | | MFR | Density | Decane-soluble component content | Bulk density | Melt tension | Average particle diameter | Content of very fine polymer particles (particle diameter: < 100 μm) |
| | g | g/10min. | g/cm$^3$ | wt% | g/cm$^3$ | g | μm | wt% |
| Example 16 | 108 | 0.95 | 0.919 | <0.1 | 0.35 | 6.5 | 700 | <0.1 |
| Example 17 | 160 | 0.11 | 0.943 | <0.1 | 0.37 | 28.5 | 680 | <0.1 |
| Example 18 | 120 | 1.79 | 0.921 | <0.1 | 0.35 | 2.1 | 680 | <0.1 |
| Example 19 | 96 | 1.59 | 0.920 | <0.1 | 0.39 | 3.9 | 710 | <0.1 |
| Example 20 | 116 | 1.01 | 0.917 | <0.1 | 0.37 | 6.2 | 650 | <0.1 |
| Example 21 | 80 | 0.98 | 0.919 | <0.1 | 0.39 | 6.4 | 680 | <0.1 |
| Example 22 | 103 | 0.91 | 0.920 | <0.1 | 0.38 | 6.5 | 700 | <0.1 |
| Example 23 | 71 | 0.79 | 0.889 | <0.1 | 0.37 | 9.7 | 720 | <0.1 |
| Example 24 | 105 | 1.12 | 0.918 | <0.1 | 0.38 | 5.8 | 670 | <0.1 |
| Example 25 | 88 | 0.99 | 0.918 | <0.1 | 0.25 | 6.3 | 450 | 1.3 |

Table 5

| | Component [A] | | Component [B] | | | | | Component [C] | | Polymerization conditions | | | |
|---|---|---|---|---|---|---|---|---|---|---|---|---|---|
| | | | Component (b − 1) | | | | Component (b − 2) | | | | | | |
| | | | Silica | | | | | | | | | | |
| | | | Pore volume | Specific surface area | Bulk density | Hydroxyl group content | MAO | | | Comonomer | | Temp. | Time |
| | Type | μmol | $cm^3/g$ | $m^2/g$ | $g/cm^3$ | wt% | mmol | Type | mmol | Type | ml | ℃ | hr |
| Comp.Ex. 1 | $(nBuCp)_2ZrCl_2$ | 0.50 | 2.29 | 359 | 0.25 | 2.8 | 0.50 | None | 0 | 1-hexene | 80 | 70 | 1 |
| Comp.Ex. 2 | $(nBuCp)_2ZrCl_2$ | 0.50 | 1.10 | 318 | 0.38 | 4.1 | 0.50 | None | 0 | 1-hexene | 80 | 70 | 1 |
| Comp.Ex. 3 | $(nBuCp)_2ZrCl_2$ | 0.50 | 0.98 | 280 | 0.40 | 0.1 | 0.50 | TIBA | 0.3 | 1-hexene | 80 | 70 | 1 |
| Comp.Ex. 4 | $(nBuCp)_2ZrCl_2$ | 0.50 | 1.10 | 318 | 0.38 | 4.1 | 0.50 | TIBA | 0.3 | 1-hexene | 80 | 70 | 1 |
| Comp.Ex. 5 | $(nBuCp)_2ZrCl_2$ | 0.50 | 1.10 | 318 | 0.38 | 4.1 | 0.50 | None | 0 | 1-hexene | 80 | 70 | 1 |
| Comp.Ex. 6 | $(nBuCp)_2ZrCl_2$ | 0.50 | 0.98 | 280 | 0.40 | 0.1 | 0.50 | TIBA | 0.3 | 1-hexene | 80 | 70 | 1 |

Table 6

| | Amount of polymer obtained | Properties of polymer obtained | | | | | |
|---|---|---|---|---|---|---|---|
| | | MFR | Density | Decane-soluble component content | Bulk density | Average particle diameter | Content of very fine polymer particles (particle diameter: < 100 μm) |
| | g | g/10min. | $g/cm^3$ | wt% | $g/cm^3$ | μm | wt% |
| Comp.Ex. 1 | 6 | 2.09 | 0.915 | <0.1 | 0.18 | 310 | 3.8 |
| Comp.Ex. 2 | 8 | 2.05 | 0.917 | <0.1 | 0.30 | 330 | 3.7 |
| Comp.Ex. 3 | 35 | 2.57 | 0.923 | <0.1 | 0.21 | 420 | 1.5 |
| Comp.Ex. 4 | 7 | 2.01 | 0.914 | <0.1 | 0.31 | 320 | 3.9 |
| Comp.Ex. 5 | — | — | — | — | — | — | — |
| Comp.Ex. 6 | 18 | 2.73 | 0.925 | <0.1 | 0.20 | 350 | 3.0 |

Industrial Applicability

The olefin polymerization catalyst system of the present invention exhibits high polymerization activity and can be advantageously used in suspension polymerization or gaseous phase polymerization of olefins for producing olefin polymers having not only excellent powder characteristics but also desired various properties even without conducting a preliminary polymerization. Therefore, the commercial value of the catalyst system of the present invention is extremely high.

**Claims**

**1.** An olefin polymerization catalyst system comprising the following components (A), (B) and (C):

(A) at least one transition metal compound represented by the formula (1)

$$R^0_xR^1_aR^2_bR^3_cR^4_dM \quad (1)$$

wherein:

M represents a transition metal selected from the group consisting of zirconium, titanium and hafnium;
$R^1$ represents a ligand selected from the group consisting of a ligand having a cyclopentadienyl skeleton, a five-membered heterocyclic ligand containing 1 to 4 carbon atoms and one or more heteroatoms selected from the group consisting of nitrogen, phosphorus, arsenic, antimony and bismuth, and a heteroatom tridentate ligand having coordinating atoms selected from the group consisting of nitrogen, phosphorus and oxygen, wherein each ligand is independently unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from said substituents, that each alkyl group independently possesses a linear, a branched or a cyclic configuration, that at least one substituent of each substituted ligand is optionally bonded to said ligand through an oxygen, a nitrogen, a sulfur or a

phosphorus atom, and that at least one carbon atom of at least one substituent of each substituted ligand is optionally replaced by a silicon atom;

each of $R^2$, $R^3$ and $R^4$ independently represents a ligand selected from the group consisting of a ligand having a cyclopentadienyl skeleton, a five-membered heterocyclic ligand having 1 to 4 carbon atoms and one or more heteroatoms selected from the group consisting of nitrogen, phosphorus, arsenic, antimony and bismuth, a heteroatom tridentate ligand having coordinating atoms selected from the group consisting of nitrogen, phosphorus and oxygen, a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, an alkylaryl group having a $C_6$-$C_{20}$ aryl group substituted with a $C_1$-$C_{20}$ alkyl group, a $-SO_3R$ group in which R is a $C_1$-$C_8$ hydrocarbon group which is unsubstituted or substituted with at least one halogen atom, a halogen atom, and a hydrogen atom, wherein each of said alkyl groups as the ligand and as the substituent independently possesses a linear, a branched or a cyclic configuration, each of said alkyl, aryl, alkylaryl and aralkyl groups as the ligands is optionally bonded to said transition metal through an oxygen, a nitrogen, a sulfur or a phosphorus atom to form a heteroatom-mediated ligand, at least one carbon atom of each of said alkyl, aryl, aralkyl and alkylaryl groups as the ligands is optionally replaced by a silicon atom, and each of said ligand having a cyclopentadienyl skeleton, said five-membered heterocyclic ligand having 1 to 4 carbon atoms and one or more heteroatoms selected from the group consisting of nitrogen, phosphorus, arsenic, antimony and bismuth, and said heteroatom tridentate ligand having coordinating atoms selected from the group consisting of nitrogen, phosphorus and oxygen is unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from said substituents, that each alkyl group as the substituent independently possesses a linear, a branched or a cyclic configuration, that at least one substituent of each substituted ligand is optionally bonded to said ligand through an oxygen, a nitrogen, a sulfur or a phosphorus atom, and that at least one carbon atom of at least one substituent of each substituted ligand is optionally replaced by a silicon atom;

a is an integer of 1 or more and each of b, c and d is an integer of from 0 to 3, with the proviso that $a+b+c+d = 4$ ;

each of $R^1$, $R^2$, $R^3$ and $R^4$ is bonded to said transition metal M;

$R^0$ represents a group which bridges $R^1$ with the ligand selected from $R^2$, $R^3$ and $R^4$ and, which is selected from the group consisting of a $C_1$-$C_{20}$ alkylene group, a $C_1$-$C_{20}$ substituted alkylene group, a $C_1$-$C_{20}$ alkylidene group, a silylene group and a substituted silylene group having at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group; and

x is 0 or 1;

(B) an inorganic solid component comprising a particulate inorganic solid (b-1) having hydroxyl groups on the surface thereof and, carried thereon, an organoaluminumoxy compound (b-2) having repeating alkylaluminumoxy units each represented by the formula (5)

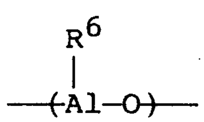

(5)

wherein $R^6$ represents a $C_1$-$C_{12}$ linear, branched or cyclic alkyl group; and

(C) an organoaluminum compound.

**2.** The catalyst system according to claim 1, wherein said component (C) is a compound represented by the following formula (6) or (7):

$$R^7{}_nAlX_{3-n} \qquad (6)$$

wherein $R^7$ represents a $C_1$-$C_{12}$ linear, branched or cyclic alkyl group or a $C_6$-$C_{20}$ aryl group; X represents a halogen atom or a hydrogen atom; and n is an integer of from 1 to 3; or

$$R^7{}_nAlY_{3-n} \qquad (7)$$

wherein $R^7$ is as defined for formula (6); Y represents an $-OR^8$ group, an $-OSiR^9_3$ group, an $-AlR^{10}_2$ group, an $-NR^{11}_2$ group, an $-SiR^{12}_3$ group or an $-N(R^{13})AlR^{14}_2$ group, wherein each of $R^8$, $R^9$, $R^{10}$ and $R^{14}$ independently represents a $C_1$-$C_{12}$ alkyl group or a $C_6$-$C_{20}$ aryl group, $R^{11}$ represents a hydrogen atom, a $C_1$-$C_{12}$ alkyl group, a $C_6$-$C_{20}$ aryl group, or a silyl group which is unsubstituted or substituted with at least one $C_1$-$C_{12}$ alkyl group, and each of $R^{12}$ and $R^{13}$ independently represents a $C_1$-$C_{12}$ alkyl group, with the proviso that each alkyl group is independently of a linear, a branched or a cyclic configuration; and n is 1 or 2.

**3.** The catalyst system according to claim 1 or 2, wherein, in said component (B), said particulate inorganic solid ((b-1) having hydroxyl groups on the surface thereof has a pore volume (PV: $cm^3/g$) of from 0.4 to 1.4 $cm^3/g$ and a specific surface area (SA: $m^2/g$) of from 150 to 800 $m^2/g$, with the proviso that said pore volume (PV: $cm^3/g$) and said specific surface area (SA: $m^2/g$) satisfy the following relationship:

$$SA \leqq -625 \times PV + 1100.$$

**4.** The catalyst system according to any one of claims 1 to 3, wherein, in said component (B), said particulate inorganic solid (b-1) having hydroxyl groups on the surface thereof has an average particle diameter of from 5 to 200 μm.

**5.** The catalyst system according to any one of claims 1 to 4, wherein, in said component (B), said particulate inorganic solid (b-1) having hydroxyl groups on the surface thereof is at least one member selected from the group consisting of $SiO_2$, $Al_2O_3$, MgO, $MgCl_2$, $ZrO_2$, $TiO_2$, $B_2O_3$, CaO, ZnO, BaO, $V_2O_5$, $Cr_2O_3$, ThO, mixtures thereof and composite oxides thereof.

**6.** The catalyst system according to any one of claims 1 to 4, wherein, in said component (B), said particulate inorganic solid (b-1) having hydroxyl groups on the surface thereof is a particulate silica.

**7.** The catalyst system according to claim 1, wherein said component (B) is one which is prepared by subjecting a particulate inorganic solid having hydroxyl groups on the surface thereof to heat treatment at a temperature in the range of from 150 to 1000 °C to obtain particulate inorganic solid (b-1) having a hydroxyl group content adjusted to a predetermined level within the range of from 0.5 to 15 % by weight and contacting said particulate inorganic solid (b-1) with organoaluminumoxy compound (b-2), thereby causing said organoaluminumoxy compound (b-2) to be carried on said particulate inorganic solid (b-1).

**8.** The catalyst system according to claim 1, wherein said component (B) is one which is prepared by contacting a particulate inorganic solid having hydroxyl groups on the surface thereof with an organoaluminum compound represented by the following formula (4):

$$R^5{}_nAlX_{3-n} \qquad (4)$$

wherein $R^5$ represents a $C_1$-$C_{12}$ linear, branched or cyclic alkyl group or a $C_6$-$C_{20}$ aryl group; X represents a halogen atom or a hydrogen atom; and n is an integer of from 1 to 3,
to obtain particulate inorganic solid (b-1) having a hydroxyl group content adjusted to a predetermined level within the range of from 0.5 to 15 % by weight, and contacting said particulate inorganic solid (b-1) with organoaluminumoxy compound (b-2), thereby causing said organoaluminumoxy compound (b-2) to be carried on said particulate inorganic solid (b-1).

**9.** The catalyst system according to claim 1, wherein said component (B) is one which is prepared by contacting a particulate inorganic solid having hydroxyl groups on the surface thereof with a mixture of organoaluminumoxy compound (b-2) and an organoaluminum compound represented by the formula (4):

$$R^5{}_nAlX_{3-n} \qquad (4)$$

wherein $R^5$ represents a $C_1$-$C_{12}$ linear, branched or cyclic alkyl group or a $C_6$-$C_{20}$ aryl group; X represents a halogen atom or a hydrogen atom; and n is an integer of from 1 to 3,
to simultaneously effect an adjustment of the hydroxyl group content of the particulate inorganic solid to a predetermined level within the range of from 0.5 to 15 % by weight and a contact of the particulate inorganic solid with

said organoaluminumoxy compound (b-2), thereby causing said organoaluminumoxy compound (b-2) to be carried on said particulate inorganic solid (b-1).

**10.** The catalyst system according to any one of claims 1 to 9, wherein the atomic ratio ($Al_{b-2}$/M) of aluminum in said organoaluminumoxy compound (b-2) to said transition metal M is from 10 to 2000, the atomic ratio ($Al_c$/$Al_{b-2}$) of aluminum ($Al_c$) in said organoaluminum compound (c) to aluminum ($Al_{b-2}$) in said organoaluminumoxy compound (b-2) is from 0.01 to 5, and said organoaluminumoxy compound (b-2) is carried on said particulate inorganic solid (b-1) in an amount of from 0.5 to 500 mmol per g of said particulate inorganic solid, in terms of the amount of aluminum ($Al_{b-2}$) in said organoaluminumoxy compound (b-2).

**11.** A method for polymerizing an olefin, which comprises polymerizing at least one olefin selected from the group consisting of a $C_3$-$C_{20}$ $\alpha$-olefin and a $C_3$-$C_{20}$ cyclic olefin, or copolymerizing said at least one olefin with at least one compound represented by the formula $H_2C = CHR^{15}$ wherein $R^{15}$ is a $C_6$-$C_{20}$ aryl group, or with at least one $C_4$-$C_{20}$ linear, branched or cyclic diene, in the presence of a catalyst system comprising the following components (A), (B) and (C):

(A) at least one transition metal compound represented by the formula (1)

$$R^0_xR^1_aR^2_bR^3_cR^4_dM \qquad (1)$$

wherein:

M represents a transition metal selected from the group consisting of zirconium, titanium and hafnium;
$R^1$ represents a ligand selected from the group consisting of a ligand having a cyclopentadienyl skeleton, a five-membered heterocyclic ligand containing 1 to 4 carbon atoms and one or more heteroatoms selected from the group consisting of nitrogen, phosphorus, arsenic, antimony and bismuth, and a heteroatom tridentate ligand having coordinating atoms selected from the group consisting of nitrogen, phosphorus and oxygen, wherein each ligand is independently unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from said substituents, that each alkyl group independently possesses a linear, a branched or a cyclic configuration, that at least one substituent of each substituted ligand is optionally bonded to said ligand through an oxygen, a nitrogen, a sulfur or a phosphorus atom, and that at least one carbon atom of at least one substituent of each substituted ligand is optionally replaced by a silicon atom;
each of $R^2$, $R^3$ and $R^4$ independently represents a ligand selected from the group consisting of a ligand having a cyclopentadienyl skeleton, a five-membered heterocyclic ligand having 1 to 4 carbon atoms and one or more heteroatoms selected from the group consisting of nitrogen, phosphorus, arsenic, antimony and bismuth, a heteroatom tridentate ligand having coordinating atoms selected from the group consisting of nitrogen, phosphorus and oxygen, a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, an alkylaryl group having a $C_6$-$C_{20}$ aryl group substituted with a $C_1$-$C_{20}$ alkyl group, a $-SO_3R$ group in which R is a $C_1$-$C_8$ hydrocarbon group which is unsubstituted or substituted with at least one halogen atom, a halogen atom, and a hydrogen atom, wherein each of said alkyl groups as the ligand and as the substituent independently possesses a linear, a branched or a cyclic configuration, each of said alkyl, aryl, alkylaryl and aralkyl groups as the ligands is optionally bonded to said transition metal through an oxygen, a nitrogen, a sulfur or a phosphorus atom to form a heteroatom-mediated ligand, at least one carbon atom of each of said alkyl, aryl, aralkyl and alkylaryl groups as the ligands is optionally replaced by a silicon atom, and each of said ligand having a cyclopentadienyl skeleton, said five-membered heterocyclic ligand having 1 to 4 carbon atoms and one or more heteroatoms selected from the group consisting of nitrogen, phosphorus, arsenic, antimony and bismuth, and said heteroatom tridentate ligand having coordinating atoms selected from the group consisting of nitrogen, phosphorus and oxygen is unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from said substituents, that each alkyl group as the substituent independently possesses a linear, a branched or a cyclic configuration, that at least one substituent of each substituted ligand is optionally bonded to said ligand through an oxygen, a nitrogen, a sulfur or a phosphorus atom, and that at least one carbon atom of at least one substituent of each substituted ligand is optionally replaced by a silicon atom;

a is an integer of 1 or more and each of b, c and d is an integer of from 0 to 3, with the proviso that a+b+c+d = 4 ;

each of $R^1$, $R^2$, $R^3$ and $R^4$ is bonded to said transition metal M;

$R^0$ represents a group which bridges $R^1$ with the ligand selected from $R^2$, $R^3$ and $R^4$ and, which is selected from the group consisting of a $C_1$-$C_{20}$ alkylene group, a $C_1$-$C_{20}$ substituted alkylene group, a $C_1$-$C_{20}$ alkylidene group, a silylene group and a substituted silylene group having at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group; and

x is 0 or 1;

(B) an inorganic solid component comprising a particulate inorganic solid (b-1) having hydroxyl groups on the surface thereof and, carried thereon, an organoaluminumoxy compound (b-2) having repeating alkylaluminumoxy units each represented by the formula (5)

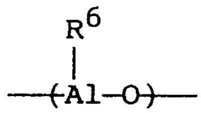

(5)

wherein $R^6$ represents a $C_1$-$C_{12}$ linear, branched or cyclic alkyl group; and

(C) an organoaluminum compound.

**12.** The method according to claim 11, wherein said $C_3$-$C_{20}$ $\alpha$-olefin is selected from the group consisting of ethylene, propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene, said $C_3$-$C_{20}$ cyclic olefin is selected from the group consisting of cyclopentene, cycloheptene, norbornene, 5-methyl-2-norbornene, tetracyclododecene and 2-methyl-1.4,5.8-dimethano-1,2,3,4,4a,5,8,8a-octahydronaphthalene, said compound represented by the formula $H_2C=CHR^{15}$, wherein $R^{15}$ is a $C_6$-$C_{20}$ aryl group, is styrene, and said $C_4$-$C_{20}$ linear, branched or cyclic diene is selected from the group consisting of 1,3-butadiene, 1,4-pentadiene, 1,4-hexadiene, 1,5-hexadiene and cyclohexadiene.

**13.** The method according to claim 11 or 12, wherein said catalyst system is caused to be present in a reaction system for the polymerization or copolymerization by separately introducing said component (A), said component (B) and said component (C) into said reaction system.

**14.** The method according to claim 11 or 12, wherein said catalyst system is caused to be present in a reaction system for the polymerization or copolymerization by forming an intimate mixture of said components (B) and (C), and separately introducing said intimate mixture and said component (A) into said reaction system.

**15.** The method according to claim 11 or 12, wherein said catalyst system is caused to be present in a reaction system for the polymerization or copolymerization by forming an intimate mixture of said components (A) and (C), and separately introducing said intimate mixture and said component (B) into said reaction system.

**16.** A method for polymerizing ethylene, which comprises homopolymerizing ethylene, or copolymerizing ethylene with at least one compound selected from the group consisting of a compound represented by the formula $H_2C=CHR^{16}$ wherein $R^{16}$ is a $C_1$-$C_{18}$ linear, branched or cyclic alkyl group or a $C_6$-$C_{20}$ aryl group, a $C_3$-$C_{20}$ cyclic olefin, and a $C_4$-$C_{20}$ linear, branched or cyclic diene, in the presence of a catalyst system comprising the following components (A), (B) and (C):

(A) at least one transition metal compound represented by the formula (1)

$$R^0_x R^1_a R^2_b R^3_c R^4_d M \qquad (1)$$

wherein:

M represents a transition metal selected from the group consisting of zirconium, titanium and hafnium;
$R^1$ represents a ligand selected from the group consisting of a ligand having a cyclopentadienyl skeleton, a five-membered heterocyclic ligand containing 1 to 4 carbon atoms and one or more heteroatoms selected from the group consisting of nitrogen, phosphorus, arsenic, antimony and bismuth, and a heteroatom tridentate ligand having coordinating atoms selected from the group consisting of nitrogen, phosphorus and oxygen, wherein each ligand is independently unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from said substituents, that each alkyl group independently possesses a linear, a branched or a cyclic configuration, that at least one substituent of each substituted ligand is optionally bonded to said ligand through an oxygen, a nitrogen, a sulfur or a phosphorus atom, and that at least one carbon atom of at least one substituent of each substituted ligand is optionally replaced by a silicon atom;
each of $R^2$, $R^3$ and $R^4$ independently represents a ligand selected from the group consisting of a ligand having a cyclopentadienyl skeleton, a five-membered heterocyclic ligand having 1 to 4 carbon atoms and one or more heteroatoms selected from the group consisting of nitrogen, phosphorus, arsenic, antimony and bismuth, a heteroatom tridentate ligand having coordinating atoms selected from the group consisting of nitrogen, phosphorus and oxygen, a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, an alkylaryl group having a $C_6$-$C_{20}$ aryl group substituted with a $C_1$-$C_{20}$ alkyl group, a $-SO_3R$ group in which R is a $C_1$-$C_8$ hydrocarbon group which is unsubstituted or substituted with at least one halogen atom, a halogen atom, and a hydrogen atom, wherein each of said alkyl groups as the ligand and as the substituent independently possesses a linear, a branched or a cyclic configuration, each of said alkyl, aryl, alkylaryl and aralkyl groups as the ligands is optionally bonded to said transition metal through an oxygen, a nitrogen, a sulfur or a phosphorus atom to form a heteroatom-mediated ligand, at least one carbon atom of each of said alkyl, aryl, aralkyl and alkylaryl groups as the ligands is optionally replaced by a silicon atom, and each of said ligand having a cyclopentadienyl skeleton, said five-membered heterocyclic ligand having 1 to 4 carbon atoms and one or more heteroatoms selected from the group consisting of nitrogen, phosphorus, arsenic, antimony and bismuth, and said heteroatom tridentate ligand having coordinating atoms selected from the group consisting of nitrogen, phosphorus and oxygen is unsubstituted or substituted with at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group, with the proviso that each substituted ligand optionally has a substitution such that at least two positions thereof are together substituted with one multivalent group derived from a substituent selected from said substituents, that each alkyl group as the substituent independently possesses a linear, a branched or a cyclic configuration, that at least one substituent of each substituted ligand is optionally bonded to said ligand through an oxygen, a nitrogen, a sulfur or a phosphorus atom, and that at least one carbon atom of at least one substituent of each substituted ligand is optionally replaced by a silicon atom;
a is an integer of 1 or more and each of b, c and d is an integer of from 0 to 3, with the proviso that $a+b+c+d = 4$ ;
each of $R^1$, $R^2$, $R^3$ and $R^4$ is bonded to said transition metal M;
$R^0$ represents a group which bridges $R^1$ with the ligand selected from $R^2$, $R^3$ and $R^4$ and, which is selected from the group consisting of a $C_1$-$C_{20}$ alkylene group, a $C_1$-$C_{20}$ substituted alkylene group, a $C_1$-$C_{20}$ alkylidene group, a silylene group and a substituted silylene group having at least one substituent selected from the group consisting of a $C_1$-$C_{20}$ alkyl group, a $C_6$-$C_{20}$ aryl group, an aralkyl group having a $C_1$-$C_{20}$ alkyl group substituted with at least one $C_6$-$C_{20}$ aryl group, and an alkylaryl group having a $C_6$-$C_{20}$ aryl group substituted with at least one $C_1$-$C_{20}$ alkyl group; and
x is 0 or 1;

(B) an inorganic solid component comprising a particulate inorganic solid (b-1) having hydroxyl groups on the surface thereof and, carried thereon, an organoaluminumoxy compound (b-2) having repeating alkylaluminumoxy units each represented by the formula (5)

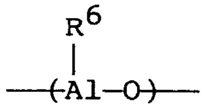

(5)

wherein $R^6$ represents a $C_1$-$C_{12}$ linear, branched or cyclic alkyl group; and

(C) an organoaluminum compound.

**17.** The method according to claim 16, wherein said compound represented by the formula $H_2C=CHR^{16}$, wherein $R^{16}$ is a $C_1$-$C_{18}$ linear, branched or cyclic alkyl group or a $C_6$-$C_{20}$ aryl group, is selected from the group consisting of propylene, 1-butene, 1-pentene, 1-hexene, 4-methyl-1-pentene, 1-octene, 1-decene, 1-dodecene, 1-tetradecene, 1-hexadecene, 1-octadecene, 1-eicosene, vinylcyclohexane and styrene, said $C_3$-$C_{20}$ cyclic olefin is selected from the group consisting of cyclopentene, cycloheptene, norbornene, 5-methyl-2-norbornene, tetracyclododecene and 2-methyl-1.4,5.8-dimethano-1,2,3,4,4a,5,8,8a-octahydronaphthalene, and said $C_4$-$C_{20}$ linear, branched or cyclic diene is selected from the group consisting of 1,3-butadiene, 1,4-pentadiene, 1,4-hexadiene, 1,5-hexadiene and cyclohexadiene.

**18.** The method according to claim 16 or 17, wherein said catalyst system is caused to be present in a reaction system for the polymerization or copolymerization by separately introducing said component (A), said component (B) and said component (C) into said reaction system.

**19.** The method according to claim 16 or 17, wherein said catalyst system is caused to be present in a reaction system for the polymerization or copolymerization by forming an intimate mixture of said components (B) and (C), and separately introducing said intimate mixture and said component (A) into said reaction system.

**20.** The method according to claim 16 or 17, wherein said catalyst system is caused to be present in a reaction system for the polymerization or copolymerization by forming an intimate mixture of said components (A) and (C), and separately introducing said intimate mixture and said component (B) into said reaction system.

## INTERNATIONAL SEARCH REPORT

International application No.
PCT/JP94/02068

**A. CLASSIFICATION OF SUBJECT MATTER**

Int. Cl$^6$ C08F10/00,C08F4/642

According to International Patent Classification (IPC) or to both national classification and IPC

**B. FIELDS SEARCHED**

Minimum documentation searched (classification system followed by classification symbols)

Int. Cl$^6$ C08F10/00-10/14,C08F110/00-110/14,
C08F210/00-210/18,C08F4/00-4/82

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, A, 61-276805 (Asahi Chemical Industry Co., Ltd.), December 6, 1986 (06. 12. 86), (Family: none) | 1-20 |
| Y | JP, A, 4-96908 (Mitsui Petrochemical Industries, Ltd.), March 30, 1992 (30. 03. 92) (Family: none) | 1-20 |

☐ Further documents are listed in the continuation of Box C. ☐ See patent family annex.

* Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| March 1, 1995 (01. 03. 95) | March 14, 1995 (14. 03. 95) |
| Name and mailing address of the ISA/ Japanese Patent Office | Authorized officer |
| Facsimile No. | Telephone No. |

Form PCT/ISA/210 (second sheet) (July 1992)